Europäisches Patentamt

(19) European Patent Office

Office européen des brevets

(11) Numéro de publication: **0 181 259**

**B1**

(12) **FASCICULE DE BREVET EUROPÉEN**

(45) Date de publication du fascicule du brevet:
10.05.89

(51) Int. Cl.⁴: **G 01 K 17/08**

(21) Numéro de dépôt: 85402104.5

(22) Date de dépôt: 31.10.85

| E R R A T U M |

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT:<br>SHOULD READ :<br>DEVRAIT ETRE LU : |
|---|---|---|---|---|
| une pluralité de points de | 3 | 3 | 61 | une pluralité de points j de |
| en chaque point de chaque | 3 | 4 | 18 | en chaque point j de chaque |
| représentées dans aucune | 4 | 6 | 51 | représentées sans aucune |
| en chaque point ou pièce | 5 | 7 | 28 | en chaque point j ou pièce |
| Si1 et Si2 à entrées | 5 | 7 | 31 | Si1 et Si2 à j entrées |
| (Li) d'ordre de | 9 | 15 | 6 | (Li) d'ordre i de |
| (Li) d'ordre rapporté | 9 | 15 | 42 | (Li) d'ordre i rapporté |
| (Li) d'ordre à la durée | 9 | 15 | 51 | (Li) d'ordre i à la durée |
| (Li) d'ordre en une | 9 | 16 | 13 | (Li) d'ordre i en une |
| order and, at a second input, | 16 | 29 | 51 | order j and, at a second input, |
| at each point in each | 16 | 29 | 53 | at each point j in each |

| Tag der Entscheidung<br>über die Berichtigung )<br>Date of decision on )<br>rectification: )<br>Date de décision portant )<br>sur modification: ) | 28.08.89<br>........................ | Ausgabe- und Ver-<br>öffentlichungstag: )<br>Issue and publication )<br>date: )<br>Date d'edition et de )<br>publication: ) | 15.11.89<br>........................ | Patbl.Nr.89/46<br><br>EPB no:) ........<br><br>Bull. no:) |

**Europäisches Patentamt**

(19) **European Patent Office**

**Office européen des brevets**

(11) Numéro de publication: **0 181 259**
**B1**

(12) **FASCICULE DE BREVET EUROPÉEN**

(45) Date de publication du fascicule du brevet:
**10.05.89**

(21) Numéro de dépôt: **85402104.5**

(22) Date de dépôt: **31.10.85**

(51) Int. Cl.⁴: **G 01 K 17/08**

(54) Procédé et dispositif de mesure de consommation relative d'énergie de chauffage des logements d'un immeuble collectif.

(30) Priorité: **02.11.84 FR 8416760**
**30.10.85 FR 8516151**

(43) Date de publication de la demande:
**14.05.86 Bulletin 86/20**

(45) Mention de la délivrance du brevet:
**10.05.89 Bulletin 89/19**

(84) Etats contractants désignés:
**AT BE CH DE FR GB IT LI LU NL SE**

(56) Documents cité:
**DE-A-3 201 148**
**DE-A-3 406 309**
**FR-A-836 632**
**FR-A-2 544 861**
**GB-A-2 081 444**
**US-A-4 002 890**

**HEWLETT-PACKARD JOURNAL, vol. 32, no. 7, juillet 1981, pages 9-15, Amstelveen, NL; J.S. EPSTEIN et al.: "Versatile instrument makes high-performance transducer-based measurements"**
**ELECTRONIQUE ET APPLICATIONS INDUSTRIELLES, no. 267, 15 avril 1979, pages 62,63, Paris, FR; "Détection de seuil de température on d'humidité avec alarme"**

(73) Titulaire: **QUILLE, "Le Hastings"- 2 Mail Pélissier B.P. 1048, F-76015 Rouen Cédex (FR)**

㊼② Inventeur: **Vassal, Alain, 6, Square de l'Ile De France, F-76240 Bonsecours (FR)**

㊼④ Mandataire: **Schrimpf, Robert, Cabinet Regimbeau 26, Avenue Kléber, F-75116 Paris (FR)**

## Description

La présente invention est relative à un procédé et à un dispositif de mesure de consommation relative d'énergie de chauffage ou quantité de chaleur des logements d'un immeuble collectif.

A l'heure actuelle, la mesure de consommation relative de quantité de chaleur des logements d'un immeuble collectif est rendue nécessaire en vue notamment de l'application des dispositions réglementaires, en France, décret du 31 décembre 1979, et d'une bonne économie de répartition des frais de chauffage correspondants entre chaque locataire ou occupant.

Les frais communs sont répartis proportionnellement au volume des logements et sont obtenus par un coefficient appliqué aux dépenses de combustible. Ce coefficient est pris égal à 0,4 pour les bâtiments d'habitation dont le permis de construire est antérieur au 30 Juin 1975. Les frais individuels sont répartis proportionnellement au coût des quantités de chaleur fournies à chaque logement et obtenus par le coefficient complémentaire au précédent 0,6.

De manière générale, la quantité de chaleur fournie à chaque logement est évaluée en proportion des surfaces habitables respectives des divers logements.

Ce système s'il tend à permettre une meilleure répartition des frais de chauffage et à la rendre plus équitable ne permet cependant pas de réduire totalement les effets du vol de calories entre logements et en tout état de cause pénalise les occupants économes. Il ne tient pas non plus compte, à surface habitable égale, des situations thermiquement défavorisées ou peut même inciter certains occupants à des attitudes visant à réduire leur consommation de quantité de chaleur, telles que réduction anormale de la ventilation des locaux par exemple, ayant pour conséquence, à terme, des détériorations du bâti.

D'autres systèmes ont été décrits dans l'état de la technique.

Ainsi, le brevet français FR-A-2 544 861 décrit un compteur de quantités de chaleur muni d'un calculateur centralisé à microprocesseur et de sondes thermo-électriques. Les sondes thermo-électiques sont réparties sur des radiateurs individuels de chauffage.

Le brevet français FR-A-1 592 388 décrit un procédé et un dispositif de comptage pour installations individuelles de chauffage à alimentation collective. Une grandeur de base est mesurée laquelle est fonction de la température demandée par chaque usager. Cette grandeur de base est fonction de la différence entre la température effectivement obtenue par chaque usager et la température extérieure. Chaque installation comprend un détecteur fournissant un signal qui est fonction de la température demandée et un intégrateur de ce signal par rapport au temps.

La présente invention a pour objet de remédier aux inconvénients précités par la mise en oeuvre d'un procédé et d'un dispositif de mesure de consommation relative d'énergie de chauffage des logements d'un immeuble collectif dans lesquels une situation thermiquement défavorisée d'un logement n'intervient pas.

Un autre objet de l'invention est la mise en oeuvre d'un procédé et d'un dispositif susceptibles de restituer à l'occupant de chaque logement considéré la quasi totalité de la maîtrise de contrôle de la consommation d'énergie de chauffage qui lui sera effectivement facturée en fin de saison de chauffage.

Un autre objet de la présente invention est la mise en oeuvre d'un procédé et d'un dispositif susceptibles de permettre une optimalisation totale des processus connexes de ventilation ou aération des logements d'un immeuble collectif de manière aussi indépendante de la consommation moyenne d'énergie de chauffage, l'occupant de chaque logement devenant responsable de la quantité de chaleur consommée qui lui sera facturée en fin de saison de chauffage.

Le dispositif de mesure de consommation relative d'énergie de chauffage des logements d'un immeuble, objet de l'invention est défini conformément à l'actuelle revendication 1.

Le procédé de mesure de consommation relative d'énergie de chauffage des logements d'un immeuble, objet de l'invention, est défini conformément à l'actuelle revendication 19.

Le procédé et le dispositif objet de l'invention trouvent application à la gestion du chauffage d'immeubles collectifs neufs ou rénovés, c'est-à-dire d'immeubles dans lesquels les installations sont telles que les gaspillages d'énergie ont été éliminés au maximum.

L'invention sera mieux comprise à la lecture de la description et à l'observation des dessins ci-après dans lesquels:

- la figure 1 représente un schéma fonctionnel illustratif du procédé et du dispositif selon l'invention,
- la figure 2 représente un mode de réalisation en conception de type analogique du dispositif objet de l'invention,
- la figure 3 représente un détail de réalisation également en conception de type analogique, d'un dispositif selon la figure 1 selon un mode préférentiel,
- la figure 4 représente un mode de réalisation préférentiel objet de l'invention, sous forme informatisée,
- la figure 5 représente en a), b), c) l'architecture d'un détail de réalisation objet de l'invention,
- la figure 6 représente une vue de l'architecture complète d'un système selon l'invention appliqué à un immeuble collectif,
- la figure 7 représente un diagramme représentatif des paramètres de température ou d'écarts de température et de temps ou durée entrant en jeu dans une variante avantageuse du procédé selon l'invention,
- les figures 8a, 8b, 8c et 8d représentent, à titre d'exemple non limitatif, un mode d'affichage particulièrement avantageux des paramètres de la variante avantageuse du procédé de l'invention auprès de l'usager occupant son logement Li permettant à celui-ci d'assurer une conduite optimale de l'allure de chauffe individuelle notamment et collective,

la figure 9 représente une variante de réalisation du dispositif, cette variante étant spécialement adaptée à la mise en oeuvre de la variante du procédé de l'invention.

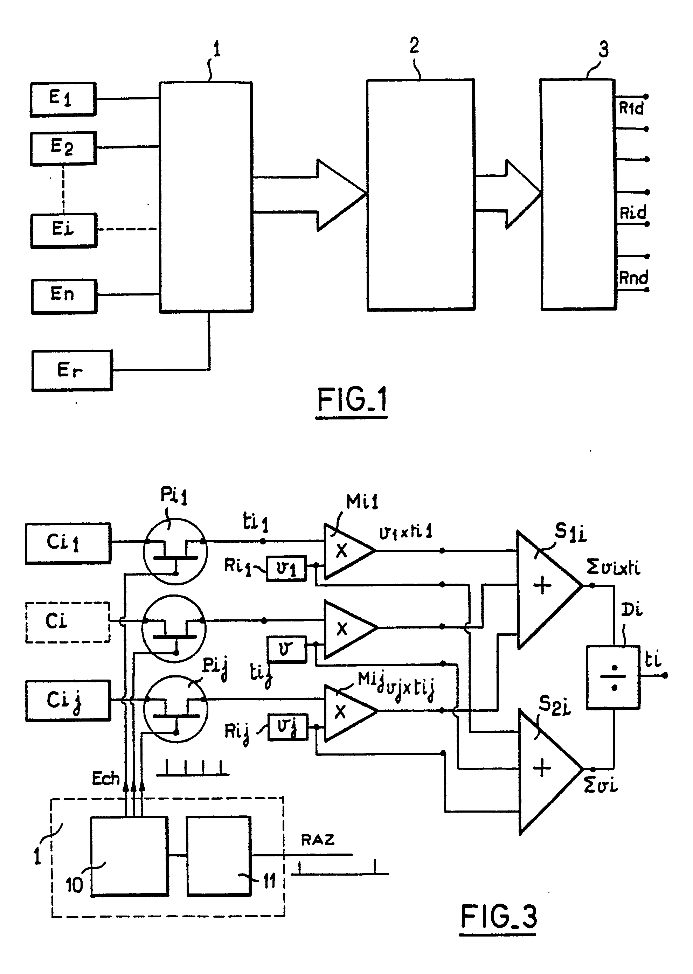

Une description du procédé de mesure de consommation relative d'énergie de chauffage des logements d'un immeuble collectif sera tout d'abord donnée notamment à l'aide de la figure 1. Les logements par commodité sont notés Li, l'indice i représentant l'ordre du logement de l'immeuble. Le procédé selon l'invention consiste à mesurer à des instants déterminés la température moyenne instantanée ti de chaque logement et au moins une température de référence tr. L'écart de cette température moyenne par rapport à la température de référence est ensuite intégré sur une durée égale à la saison de chauffe par exemple. L'intégration précitée peut également pour obtenir une meilleure souplesse de mise en oeuvre du procédé être effectuée à titre d'exemple sur une durée élémentaire sous multiple de la durée de la saison de chauffe. Les intégrations précitées permettent de définir sur les durées correspondantes un écart de température moyen Tid pour chaque logement Li. La mesure de la consommation relative d'énergie de chaque logement Li est alors déterminée sur cette durée par une pondération de la forme

$$Rid \ = \frac{Vi \times Tid}{\sum_{i} Vi \times Tid} \qquad (I)$$

dans laquelle Tid représente l'écart de température moyen de chaque logement Li rapporté à la durée considérée, égale à ou sous multiple de la saison de chauffe et dans laquelle Vi représente le volume habitable effectif de chaque logement Li. A titre d'exemple non limitatif, la mesure de la température moyenne instantanée ti de chaque logement est effectuée toutes les heures. Le procédé tel que défini précédemment permet en fait de tenir compte des situations thermiquement défavorisées pour des logements de surface ou volume habitable identiques.

Afin d'obtenir une meilleure détermination de la température moyenne instantanée de chaque logement Li, la température moyenne instantanée ti de chaque logement Li est effectuée simultanément en une pluralité de points de chaque logement. Une pluralité de températures élémentaires moyennes instantanées tij est ainsi déterminée pour chaque logement Li. A titre d'exemple, ces températures moyennes élémentaires peuvent être mesurées dans les pièces principales du logement. Il n'est pas nécessaire d'effectuer une telle mesure dans chaque pièce, ces mesures pouvant être limitées à la salle de séjour, les chambres, la cuisine, pièces qui représentent dans le logement le volume de chauffage moyen le plus important. La température moyenne instantanée ti de chaque logement Li est alors définie à partir des températures élémentaires moyennes instantanées tij par une pondération de la forme

$$ti \ =_{j} \frac{\sum vj \times tij}{\sum vj} \qquad (II)$$

dans laquelle vj représente le volume de chauffage moyen en chaque point de chaque logement Li. La durée élémentaire sous multiple de la durée de la saison de chauffe est la journée, la consommation relative en énergie de chauffage de chaque logement pouvant ainsi être connue au jour le jour. Dans le cas du mode de réalisation du procédé de l'invention précité, c'est-à-dire lorsque la durée d'intégration des écarts de températures moyen est un sous multiple de la durée de la saison de chauffe, le procédé comporte en outre une étape supplémentaire d'intégration de la mesure de consommation relative d'énergie sur toute la durée de la saison de chauffe, de manière à obtenir une mesure globale de la forme

$$Ri = \sum_{d} Rid.$$

Cette mesure globale est représentative de la consommation relative d'énergie de chauffage de chaque logement Li sur toute la saison de chauffe ou sur toute durée déterminée à partir du début de la saison de chauffe.

La mesure de la température de référence tr peut être effectuée simultanément à la mesure des températures moyennes tj ou tij en un point ou en une pluralité de points situés à l'extérieur de l'immeuble. Ce ou ces points extérieurs peuvent être de préférence situés au niveau d'une ou des façades de l'immeuble, sous l'avant-toit lorsque l'immeuble en est pourvu, ou en tout endroit approprié. Dans le cas où la température extérieure est mesurée en plusieurs points, la température de référence tr peut avantageusement être définie par une combinaison linéaire de ces dernières. Par exemple la mesure peut être effectuée sur la face nord et sur la face sud de l'immeuble, la température de référence tr pouvant être définie comme la moyenne arithmétique de ces deux températures extérieures.

Le procédé tel que défini précédemment, trouve son application de manière avantageuse dans tout type d'installations de chauffage collectif dans lesquelles l'alimentation des circuits de chauffage des logements est effectuée soit de manière dite "verticale" ou "horizontale". Par installation verticale on entend l'alimentation des circuits de de chauffage à partir d'une colonne montante et d'une colonne descendante de fluide caloporteur, par installation horizontale on entend une alimentation des circuits de chauffage de chaque logement à partir d'un réservoir ou bouteille de fluide caloporteur et d'un circuit en boucle. L'application du procédé de l'invention se justifie notamment dans les installations où une optimalisation totale des programmes de chauffage a pu être effectuée, c'est-à-dire dans les installations où notamment les pertes par défaut d'isolation thermique et les gaspillages intempestifs dus à une mauvaise gestion de l'installation ont été éliminés.

Une description d'un dispositif de mesure de la consommation relative d'énergie de chauffage des logements d'un immeuble collectif selon l'invention sera maintenant décrite à l'aide des figures 1 à 3 de la description. Ce dispositif ainsi que représenté en figure 1 comprend pour chaque logement Li d'ordre i d'un immeuble des moyens Ei pour échantillonner à des instants déterminés la température moyenne instantanée ti de chaque logement et au moins une température de référence tr. En outre, des moyens 1, 2 pour intégrer sur une durée égale à la saison de chauffe ou sur toute durée élémentaire sous multiple de cette durée précitée permettent de définir sur les durées correspondantes un écart de température moyen Tid pour chacun des logements Li. Des moyens pondérateurs 3 permettent de déterminer sur cette durée une valeur Rid de la mesure de consommation relative d'énergie de chaque logement Li selon la relation I déjà citée.

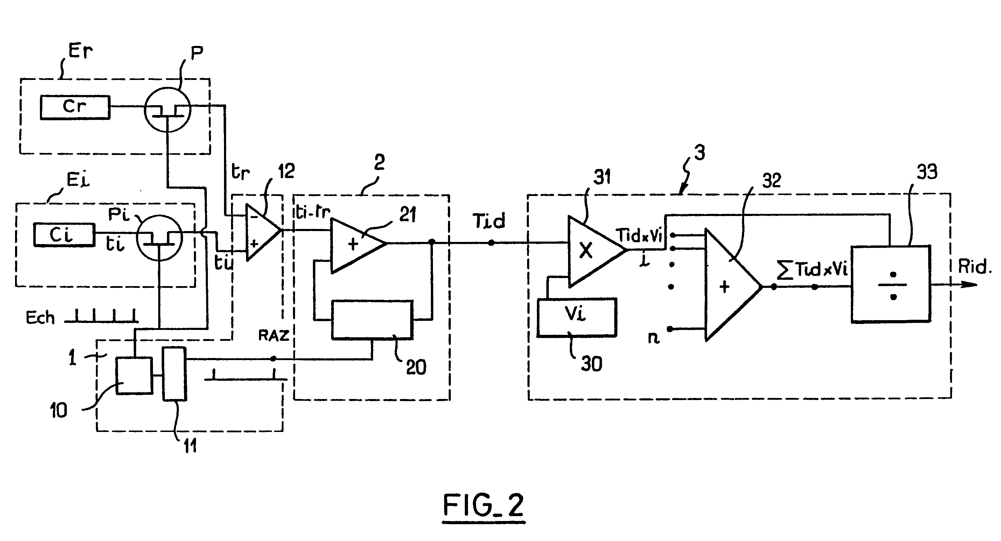

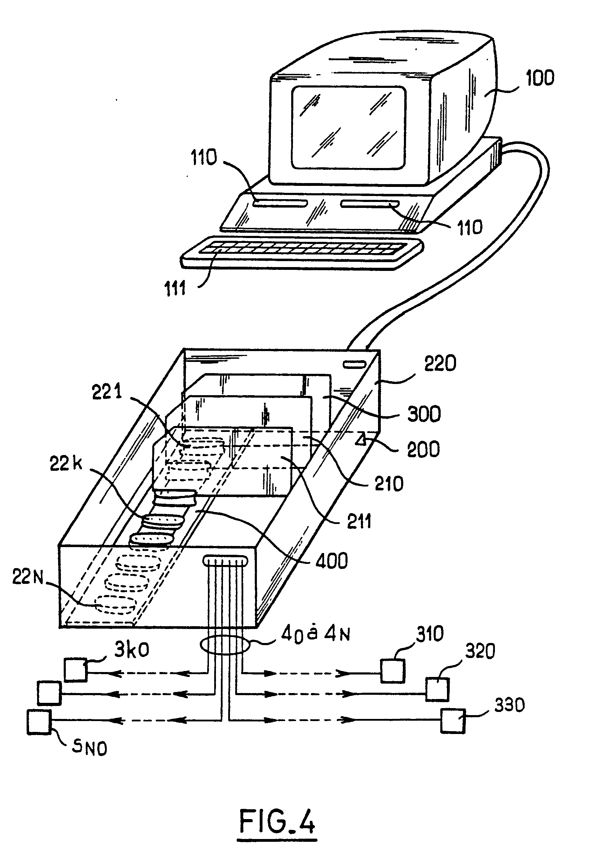

Ainsi que représenté notamment en figures 2 et 3, les moyens Ei pour échantillonner à des instants déterminés la température moyenne instantanée ti de chaque logement comportent au moins un capteur de température Ci convenablement disposé dans le logement Li d'ordre i correspondant et des moyens de commande 1 de ce capteur permettant un relevé périodique de la température ti affichée par ce capteur. Les capteurs Ci sont de préférence placés dans un endroit déterminé du logement inconnu du locataire. Ils peuvent par exemple être diposés dans la gaine de ventilation des sanitaires ou autre endroit approprié. Ainsi que représenté sur la figure 2, le capteur Ci est constitué par un thermomètre électronique susceptible de délivrer un signal analogique sensiblement linéaire sur une plage de températures comprise entre 9° et 30°. Les moyens d'échantillonnage sont représentés sur la figure 2 de manière non limitative par une porte analogique Pi constituée par un transistor à effet de champ, lequel est commandé sur son électrode de grille par des impulsions d'échantillonnage délivrées par une horloge 10 des moyens de commande 1. L'horloge 10 permet la lecture des capteurs Ci et constitue une horloge de référence. Les moyens Er d'échantillonnage à des instants déterminés de la température de référence tr comportent au moins un capteur de température Cr disposé par exemple à l'extérieur du bâtiment de l'immeuble. Ce capteur Cr est également relié à une porte analogique Pr elle-même commandée en synchronisme par l'horloge 10.

Ainsi que représenté sur la figure 2, les moyens 2 d'intégrer sur une durée égale à la saison de chauffe ou sur toute durée élémentaire sous multiple de cette dernière comprennent un registre de mémoires 20 capable de mémoriser les valeurs des écarts de températures moyens tj-tr sur la durée déterminée. Des moyens sommateurs 21 reçoivent d'un soustracteur 12, sur une première entrée la valeur de l'écart ti-tr de la température mesurée ti et de la température de référence tr et sur une deuxième entrée la valeur de l'écart de température moyen intégré sur la durée considérée Tid délivré par la sortie des moyens sommateurs 21 par l'intermédiaire du registre 20. Le registre 20 reçoit en outre sur une entrée un signal de remise à zéro RAZ de l'horloge 10 par l'intermédiaire d'un circuit diviseur 11. Ainsi, les moyens sommateurs 21 et le registre mémoires 20 permettent de délivrer la valeur moyenne de l'écart de température de chaque logement Li intégré sur la durée considérée, la remise à zéro du registre 20 permettant d'effectuer cette intégration après chaque période élémentaire sous multiple de la durée de la saison de chauffe. Dans ce but, le circuit diviseur 11 permet une division dans le temps correspondant au nombre de mesures de températures effectuées sur cette durée élémentaire.

Le signal de mesure Tid de la valeur d'écart moyen intégré est ensuite délivré aux moyens pondérateurs 3. Ceux-ci comprennent ainsi que représenté en figure 3 un registre de mémoires 30 capable de mémoriser et de délivrer un signal représentatif du volume Vi habitable de chaque logement Li. Un multiplicateur 31 reçoit sur une première entrée le signal Tid et sur une deuxième entrée le signal Vi délivré par le registre 30. Un sommateur 32 à i entrées reçoit sur son entrée d'ordre i le signal Tid x Vi délivré par le multiplicateur 31 et délivre à sa sortie un signal représentatif de ΣTid x Vi. Sur la figure 2, il est clair, bien que les autres entrées du sommateur 32 soient représentées dans aucune connexion, que celles-ci sont reliées à un circuit multiplicateur analogue d'un logement i + 1 d'ordre différent. Il est également clair que l'ensemble du dispositif ne comporte alors qu'un sommateur 32. Un diviseur 33 reçoit en outre sur une première entrée le signal ΣTid x Vi délivré par le sommateur 32 et sur une deuxième entrée le signal Tid x Vi et délivre à sa sortie le signal Rid représentatif de la mesure de consommation relative d'énergie de chaque logement Li. Bien que non représenté sur la figure 2 un circuit de type analogue au moyen d'intégration 2 permet l'intégration de la valeur Rid sur toute la saison de chauffe lorsque la valeur mesurée de Tid est intégrée sur une durée sous multiple de cette saison de chauffe.

Selon un mode de réalisation préférentiel du dispositif de l'invention représenté en figure 3, les moyens d'échantillonner à des instants déterminés la température moyenne instantanée $t_i$ de chaque logement $L_i$ comporte une pluralité de capteurs de températures notés $C_{i1}$ à $C_{ij}$ convenablement répartis dans chaque logement $L_i$ en une pluralités de points j. Ces capteurs $C_{ij}$ permettent de mesurer simultanément une pluralité de températures élémentaires instantanées $t_{ij}$ pour chaque logement $L_i$ et de définir un profil de températures par pièce du logement par exemple permettant d'avoir une meilleure approximation de la quantité de chaleur effectivement consommée dans ce logement. Des moyens de commande de ces capteurs tels que représentés en figure 3, permettent un relevé périodique de ces températures $t_{ij}$. Ces moyens comprennent une pluralité de portes analogiques $P_{i1}$ à $P_{ij}$, une pluralité de multiplicateurs $M_{i1}$ à $M_{ij}$ recevant sur une première entrée un signal représentatif de la température $T_{ij}$ délivré par le capteur d'ordre j du logement $L_i$ et sur une deuxième entree un signal $v_j$ délivré par un registre $R_{ij}$ et représentatif du volume de chauffage moyen en chaque point ou pièce de chaque logement $L_i$, chaque multiplicateur $M_{ij}$ délivrant sur sa sortie un signal $v_j \times t_{ij}$. Deux sommateurs $S_{i1}$ et $S_{i2}$ à entrées reçoivent respectivement les signaux $v_j \times t_{ij}$ délivrés par les multiplicateurs $M_{i1}$ à $M_{ij}$ et les signaux $v_1$ à $v_j$ délivrés par les registres $R_{i1}$ à $R_{ij}$ et délivrent respectivement les signaux $\Sigma v_i \times t_i$ et $\Sigma v_i$ à un diviseur $D_i$. Le diviseur $D_i$ délivre à sa sortie le signal $t_i$ représentatif de la température moyenne du logement obtenue par la pondération telle que définie par la formule II.

Le mode de réalisation du dispositif selon l'invention a été donné selon une configuration de type analogique uniquement à titre d'exemple afin d'illustrer de manière concrète la mise en oeuvre du procédé correspondant de l'invention. Il va de soi, en raison notamment de la fréquence d'échantillonnage très faible des températures élémentaires ou des températures moyennes de chaque logement, qu'un mode de réalisation à l'aide de circuits numériques apparaît plus adapté, la conversion des signaux analogiques délivrés par les capteurs $C_i$ ou $C_{ij}$ en signaux numériques pouvant avantageusement être effectuée sans préjudice de la fréquence d'échantillonnage. Une telle conversion serait susceptible d'être effectuée directement en sortie des capteurs $C_i$ ou $C_{ij}$, l'ensemble des circuits précités étant alors réalisé sous forme numérique.

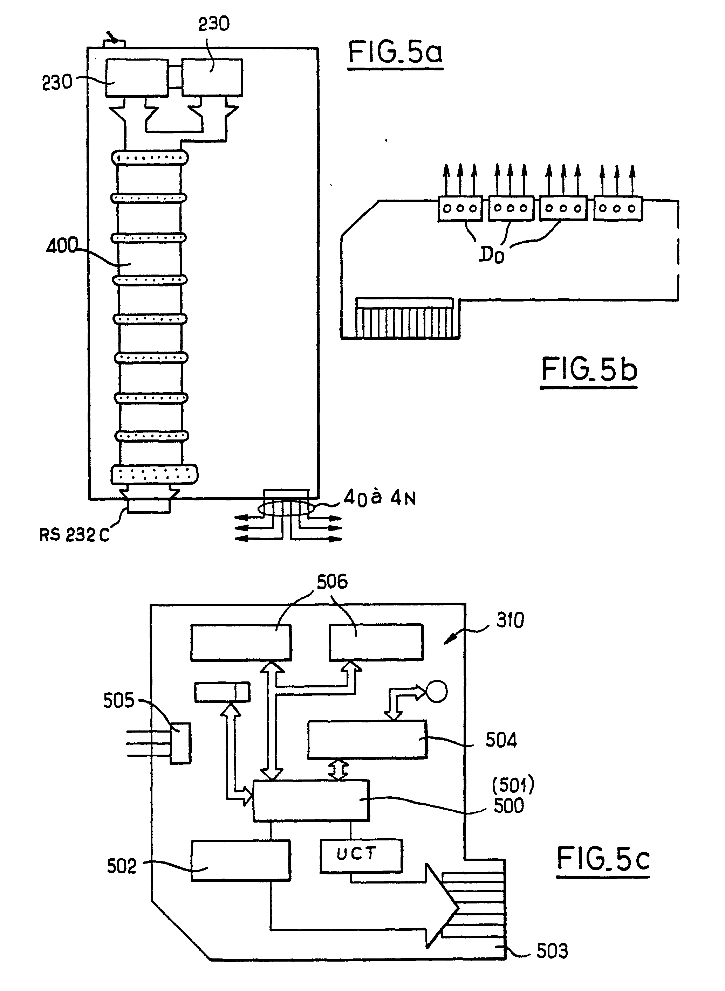

Un mode de réalisation du dispositif de l'invention particulièrement adapté à la conduite du procédé sera maintenant décrit au moyen des figures 4 à 6. Dans ce mode de réalisation, l'utilisation de moyens informatiques tels que par exemple un micro-ordinateur, ses périphériques et des transducteurs spécialement conçus pour la conduite du procédé apparaît particulièrement adaptée en vue d'obtenir l'optimalisation conjointe de la programmation du chauffage avec la conduite du procédé précité. Selon la figure 4, le dispositif tel que décrit comprend un terminal 100 et au moins une interface modulaire programmable 200 susceptible d'assurer le transfert bi-directionnel ou le traitement de données entre ledit terminal 100 et une pluralité d'émetteurs-récepteurs ou effecteurs notés 310 à 3N0 sur la figure 4. Les émetteurs-récepteurs sont constitués par des transducteurs analogiques capables d'assurer des fonctions de protection, de détection ou de correction. Ces transducteurs analogiques sont par exemple les thermomètres électroniques ou capteurs de températures déjà cités. L'interface programmable 200 peut comporter des unités de traitement de ces données en vue de leur intégration dans un programme de gestion général. Un programme pré-établi introduit à partir du terminal 100 ou à partir de tout autre moyen normalement utilisé en technique informatique permet la conduite du procédé tel que décrit précédemment par commande d'échantillonage des capteurs puis conversion analogique numérique des signaux délivrés par ces derniers, mémorisation des valeurs ainsi obtenues et traitement arithmétique de ces valeurs et/ou intégration suivant les spécifications fonctionnelles décrites précédemment pour le procédé ou le dispositif analogique décrit dans les figures 1 à 3 précédentes. A titre d'exemple non limitatif, le terminal 100 est un terminal série de type connu sous la marque de commerce "Minitel". Il peut également être constitué par tout micro-ordinateur normalement disponible dans le commerce muni par exemple d'un micro-processeur 8 bits et de ses appareils périphériques, mémoire de masse 110, clavier 111. L'interface 200 comporte au moins un coffret de base 220 comprenant un bus de commande, un bus de données et un bus d'adresses 400 ainsi que les circuits d'alimentation 230. Les circuits d'alimentation 230 sont constitués de préférence par une alimentation secourue à onduleur avec stabilisation en tension meilleure que 5 %. Une pluralité de cartes enfichables notées 211, 212, du type, cartes d'entrée à niveau logique, cartes d'entrée analogique ou cartes d'entrée à mémoires et cartes de sortie du type cartes analogiques, cartes de sortie à niveau logique. Les cartes précitées sont des cartes à circuit imprimé enfichable dont les entrées sorties analogiques sont effectuées aux moyens de connecteurs de type domino. De telles cartes sont représentées en figure 5b. Ces cartes sont des cartes normalement disponibles dans le commerce et répondent aux spécifications du catalogue de la société CREATIC en France sous les références CM 3100, CM 4100, CM 4105 par exemple. La liaison entre cartes et transducteurs peut être effectuée par exemple par des câbles de type câbles téléphoniques connectés aux domino. La liaison entre le terminal 100 tel qu'un micro-ordinateur et l'interface 200 peut être effectuée normalement au moyen d'un câble souple et d'une prise de connexion normalisée de type Canon. L'interface 200 comporte en outre une carte de liaison série 300 susceptible de dialoguer avec le micro-ordinateur. La carte de liaison série est une carte du type CM 2981 telle que décrite dans le catalogue de la société CREATIC et permet d'assurer une liaison série avec le micro-ordinateur aux normes RS 232. Sur les figures 4 et 5, on a représenté en 221, 22 k et 22 N, les connecteurs disposés au niveau du bus 400 et dans lesquels sont enfichées les différentes cartes constituant l'interface. Selon une variante de réalisation, la carte de liaison série 300 est remplacée par une carte autonome représentée en figure 5c lorsque le micro-ordinateur est remplacé par le terminal du type "Minitel". La carte 310 autonome conformément à la figure 5c comprend une unité centrale de traitement notée UCT constituée par deux processeurs 8 bits. La carte autonome 310 comporte également une mémoire morte programmable électriquement (EPROM) 500 ou une mémoire à accès aléatoire (RAM), mémoire vive 501, sauvegardée par une batterie d'accumulateurs 502. La carte autonome 310 comporte encore une prise de liaison série 504 par connecteur normalisé et une prise de liaison 505 en niveau logique TTL. Dans les deux cas, cas de l'utilisation de la carte de liaison série ou de la carte autonome, cette carte est connectée au bus 400 au moyen d'un connecteur normalisé 33 broches. Dans le cas de l'utilisation de la carte autonome, le programme de mesure et des programmes de gestion de ces mesures peuvent être chargés au niveau des mémoires 501 et de l'un des processeurs de l'unité centrale au moyen du micro-ordinateur. La programmation est effectuée au moyen d'un langage évolué tel que le langage basique. Ces programmes comportent si nécessaire des programmes d'affichage sur le terminal "Minitel" qui sera utilisé ultérieurement en lieu et place du micro-ordinateur, et les instructions essentielles du langage basique, c'est-à-dire opérations arithmétiques et logiques usuelles. En outre, dans le but d'assurer une fonction de surveillance temporelle, l'interface 200 comporte une carte horloge calendrier.

La carte horloge calendrier comporte une mémoire morte modifiable électriquement (EAROM) permettant l'affichage de la date et de l'heure sur le terminal en tenant compte notamment des années bissextiles. L'ensemble précité carte horloge, calendrier, mémoire morte (EAROM) peut également être avantageusement remplacé par un logiciel approprié.

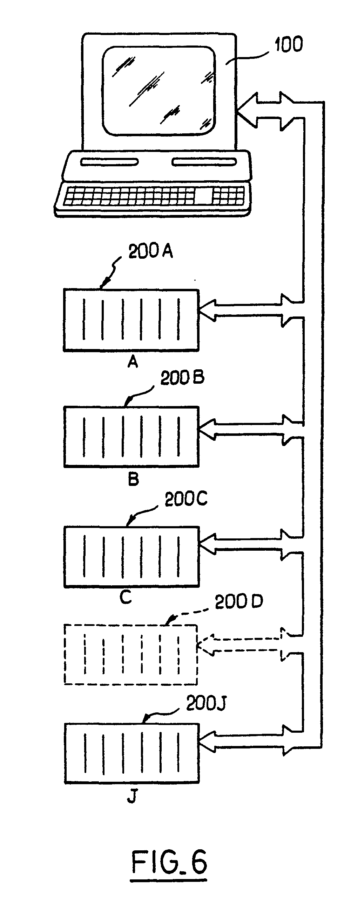

Une description de la configuration générale du dispositif de l'invention sera donnée en relation avec la figure 6 pour la gestion du procédé dans une pluralité de logements. Le dispositif tel que décrit comporte l'ordinateur central 100 ou un terminal série, et une pluralité d'interfaces 200 notées 200 A à 200 J sur la figure 6. On comprendra qu'une interface donnée est affectée à un logement correspondant (Li). Afin d'assurer la conduite du procédé selon l'invention, une adresse A à J correspondant à chaque coffret est codée dans la mémoire centrale de la carte de liaison série ou de la carte autonome. Cette adresse permet à partir d'un programme pré-établi chargé dans le micro-ordinateur 100 une interrogation des interfaces successives affectées chacune à un des logements Li et la commande correspondante des diverses étapes du procédé. Un des coffrets ou interfaces 200 A à 200 J est désigné par adresseur comme "surveillant du système". Ce coffret a pour fonction supplémentaire d'assurer un contrôle de l'alimentation de la connexion et de la transmission de messages d'erreurs au terminal ou au micro-ordinateur en cas de transmission d'instructions incorrectes.

Dans le but d'assurer une optimalisation du procédé de l'invention, c'est-à-dire en fait une gestion cohérente de la programmation de chauffage associée à la conduite du procédé, l'une des interfaces 200 comprend une carte d'entrée à mémoires permettant le comptage gaz, le comptage eau, le comptage électricité pour l'installation de chauffage. Cette carte est munie d'un bloc de report de comptage apte à assurer la transmission des données de comptage correspondante vers la carte autonome et/ou le terminal, ou, vers la carte de liaison série et/ou le micro-ordinateur. Il est ainsi possible, à partir de chacune des interfaces placées dans un logement, d'effectuer une commande contrôlée des moyens de chauffage tels que des convecteurs, ou un arrêt de ces derniers lors de l'ouverture des fenêtres, par exemple à partir de transducteurs tels que respectivement robinets thermostatique munis de systèmes de commande analogique par résistance chauffante, ou de détecteurs de contact aptes à révéler l'ouverture ou la fermeture d'une fenêtre.

Il est en outre également avantageux lorsque le terminal, dit terminal de gestion, est un micro-ordinateur de permettre à chaque occupant de pouvoir consulter ce dernier afin d'obtenir toute information utile sur l'état de leur consommation relative d'énergie journalière ou même sur une durée déterminée. Dans ce but, le micro-ordinateur est muni d'une carte MODEM et d'un logiciel micro-serveur, chaque interface 200 étant en outre pourvue elle-même d'un terminal "Minitel". Le terminal "Minitel" est relié par exemple à la prise de liaison série 505, en niveau logique TTL, et permet ainsi tout dialogue utile avec le micro-ordinateur de gestion central.

On a ainsi décrit un procédé, un mode de réalisation illustratif et un mode de réalisation avantageux d'un dispositif permettant la mise en oeuvre de ce procédé, l'affichage dans chaque logement Li de sa température moyenne ti permettant à l'occupant une conduite personnalisée de ses dépenses de chauffage à partir du thermostat d'ambiance par exemple.

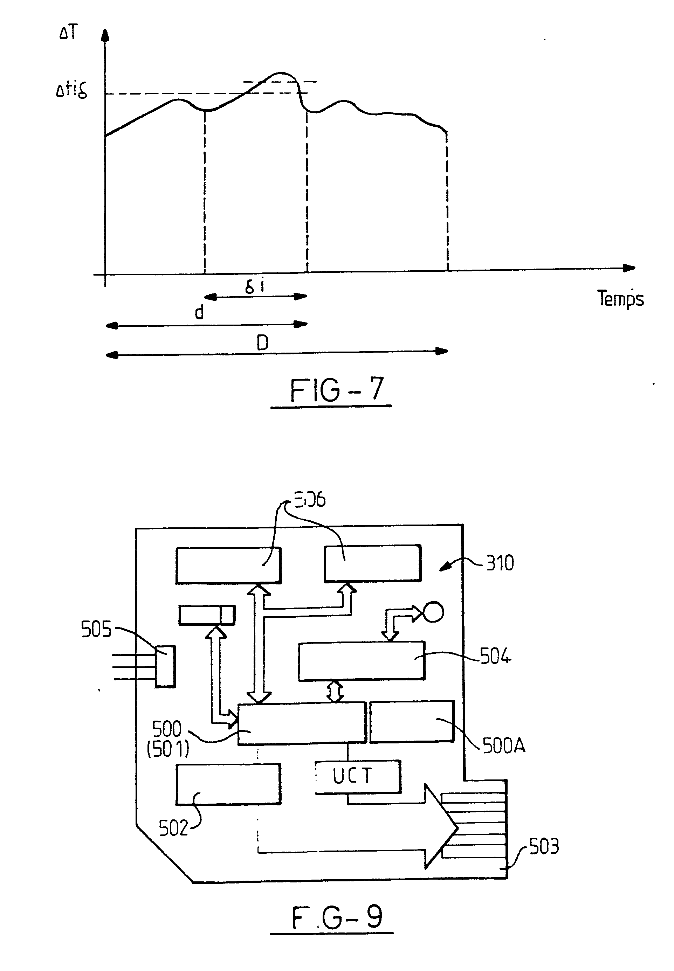

La variante avantageuse du procédé de l'invention sera également décrite en liaison avec la figure 7.

Ainsi qu'il a été décrit préalablement dans la description, les températures instantanées de chaque logement Li sont déterminées à des intervalles de temps donnés. En outre, la température moyenne pour chacun des logements Li est déterminée sur au moins une période de temps comprenant les intervalles de temps précités.

La répartition $\rho i$ des frais individuels de chauffage pour chacun des logements Li d'ordre i est alors déterminée proportionnellement au rapport de la durée d'occupation $\delta i$ du logement Li d'ordre i à la durée notée D de la saison de chauffe, au rapport du volume Vi du logement Li d'ordre i au volume chauffé total par la chaufferie collective

$$V = \sum_i Vi.$$

La répartition des frais individuels précités est en outre déterminée proportionnellement au rapport de l'écart moyen $\Delta ti\delta$ entre les températures moyenne intérieure de chaque logement Li d'ordre i et de référence extérieure pendant la durée d'occupation $\delta i$ du logement Li d'ordre i à l'écart moyen de températurre $\Delta T$ pour l'ensemble des logements de l'immeuble, durant la saison de chauffe, ou un sous-multiple de celle-ci.

Les frais sont ainsi déterminés au moyen du rapport global de répartition:

$$\rho i = \frac{\delta i \times Vi \times \Delta ti\delta}{D \times \sum Vi \times \Delta T}$$

les frais individuels étant ainsi fonction du seul confort thermique et donc du service réellement rendu à l'usager occupant, quelle que soit la provenance de l'énergie calorifique.

Bien entendu, au jour considéré correspondant à une durée d, sous-multiple ou non de la saison de chauffe, durée déterminée à partir du début de celle-ci, l'écart moyen de température $\Delta T$ pour l'ensemble des logements pour la durée considérée est déterminé par la relation

$$\Delta Td = \sum_i \frac{Vi \times \sum ti\delta}{V}$$

où Vi représente le volume du logement Li, $\Delta ti\delta$ représente l'écart moyen de température sur la durée d entre les températures moyenne intérieure du logement Li d'ordre i considéré pendant son temps d'occupation $\delta i$ et la température moyenne extérieure et V le volume total chauffé

$$V = \sum_i Vi.$$

La répartition des frais de combustible collectifs et individuels par rapport aux frais de chauffage collectif peut alors, de manière avantageuse, être effectuée conformément à la relation ci-après vérifiant l'équation:

$$Rid = (0,4 + 0,6 \tfrac{\Delta ti\delta}{\Delta Td} . \tfrac{\delta i}{D} . Vi$$

Sur la figure 7, on a représenté les différents paramètres précités, dans lesquels notamment $\delta i$ représente la durée d'occupation du logement Li, $\sum ti\delta$ l'écart moyen entre les températures moyenne intérieure de chaque logement Li et de référence extérieure pendant la durée d'occupation du logement Li, $\Delta Td$ l'écart moyen de température pour l'ensemble des logements entre le début de la saison de chauffe et le jour concerné, soit sur la durée d considérée. Bien entendu, à titre d'exemple non limitatif, les durées d et $\delta i$ sont le produit d'intervalles de temps réguliers, une heure par exemple, par le nombre de mesures effectivement réalisé.

L'écart moyen de température pour l'ensemble des logements durant la saison de chauffe, écart $\Delta T$, n'étant connu qu'à la fin de cette période, la détermination de la répartition des frais conformément au procédé de l'invention à une période intermédiaire, par exemple au jour considéré, c'est-à-dire à la fin de la durée d, est déterminée au moyen de la relation définissant $\Delta Td$.

Conformément à une variante avantageuse du procédé de l'invention, et dans le but de permettre à chaque usager occupant de chacun des logements Li d'ordre i d'assurer une conduite optimale de l'allure de chauffe individuelle et en définitive collective, le procédé de l'invention consiste à déterminer une température dite de conservation du bâti et une température moyenne de l'ensemble des logements Li ou du bâtiment. Les températures précitées et la température moyenne du logement Li d'ordre i concernant l'usager considéré, sont affichées et mises à disposition de l'usager. En outre, le gain ou la perte sur les frais de chauffage pour des durées telles que la saison de chauffe ou un sous-multiple de celle-ci sont affichés et mis à disposition de l'usager.

Le gain ou la perte sur les frais de chauffage pour chaque logement Li peut être obtenu à partir de la relation:

$$\frac{1}{0,4 + 0,6 \tfrac{\Delta ti\delta}{\Delta Td}} - 1$$

L'affichage précité peut avantageusement ainsi être réalisé sur l'écran d'un "Minitel", appareil distribué par l'Administration des Postes et Télécommunications ou tout appareil analogue.

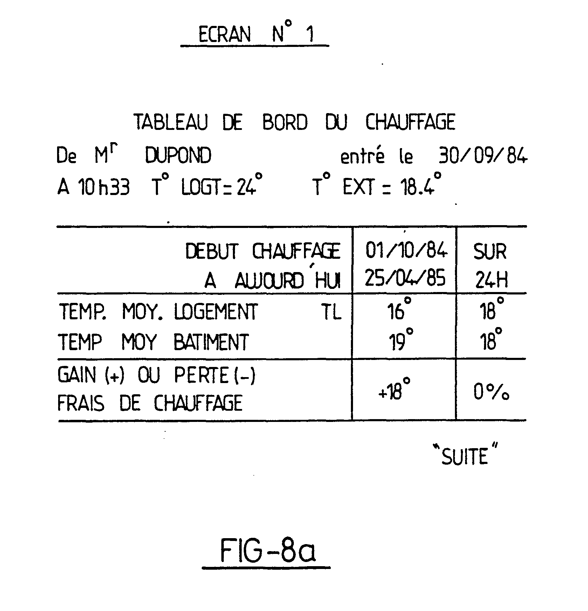

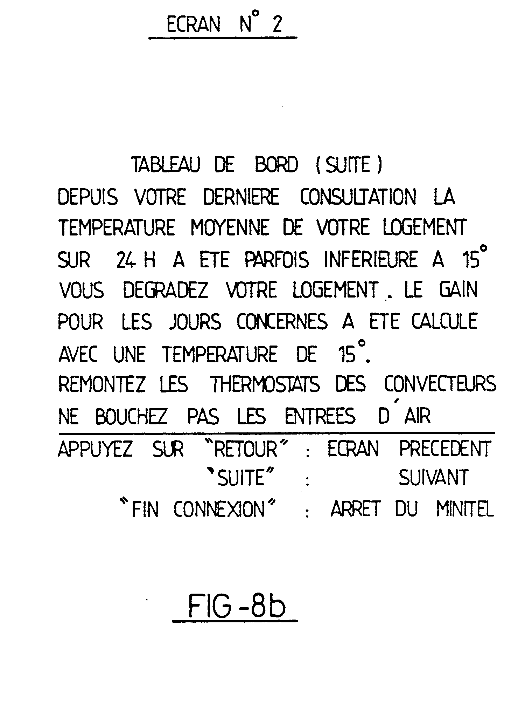

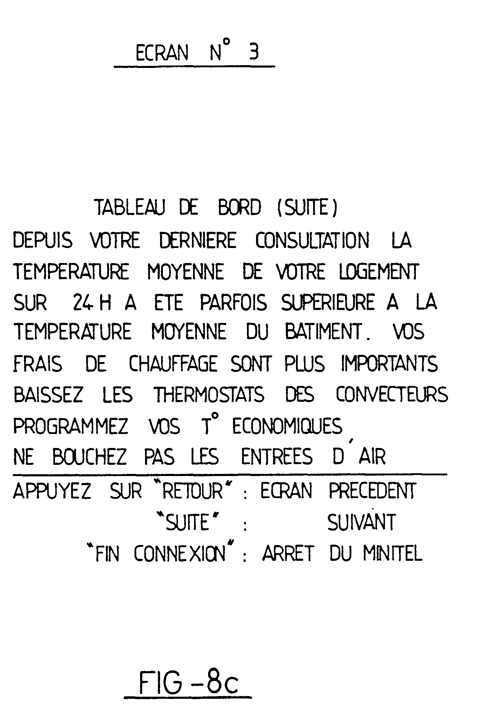

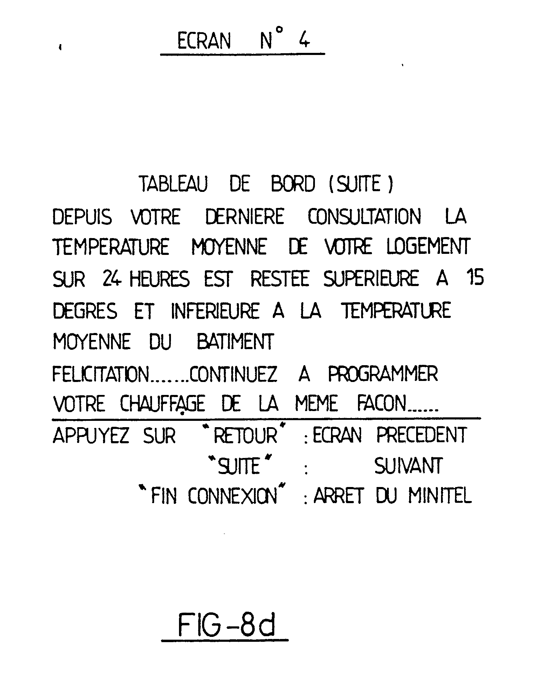

De manière avantageuse, l'affichage précité peut être mis à disposition de chaque usager de façon à présenter à celui-ci, ainsi que représenté sur les figures 8a, 8b, 8c, 8d, les températures précitées ainsi que les gains ou pertes en pourcentage, un avis et une incitation dans le cas où la température moyenne du logement a été parfois inférieure à la température de conservation du bâti sur une période ou durée de 24 heures, un avis avec mise en garde dans le cas où l'occupant dans son logement a maintenu une température supérieure à la température moyenne du bâtiment sur 24 heures, et enfin un avis et une incitation dans le cas où la température du logement considéré est à la fois inférieure à la température moyenne du bâtiment, mais n'a jamais été inférieure à la température de conservation du bâtiment, ce dernier cas apparaissant comme le cas quasi-idéal pour lequel les économies de chauffage sont possibles, tout en respectant la température de conservation du bâti.

La température de conservation du bâti peut de manière arbitraire être prise égale à une température déterminée, 15°C dans le cas de nos contrées tempérées.

Cependant, selon une variante avantageuse du procédé de l'invention, la température de conservation du bâti est déterminée à partir de la température moyenne et du degré d'hygrométrie de l'atmosphère extérieure au bâtiment.

De préférence, la température de conservation du bâti est déterminée de façon à éviter, à l'intérieur du bâtiment, et bien entendu de chaque logement Li, la condensation de vapeur d'eau laquelle reste toujours préjudiciable au maintien en bon état du bâtiment.

Une variante de réalisation du dispositif de l'invention permettant la mise en oeuvre du procédé précédemment décrit sera maintenant donnée notamment en liaison avec la figure 9.

De manière avantageuse, le dispositif de mesure de consommation relative d'énergie de chauffage des logements d'un immeuble collectif peut comporter, en outre, des moyens de mesure du degré d'hygrométrie à l'extérieur du bâtiment.

Bien entendu, les moyens précités peuvent consister en une sonde de mesure d'hygrométrie reliée au microprocesseur ou à la carte autonome au moyen d'une carte d'entrée analogique, telle que représentée en figure 5b décrite précédemment.

Les sondes de mesure d'hygrométrie utilisées peuvent être par exemple des sondes normalement disponibles dans le commerce.

En outre, et de manière à permettre une mise en oeuvre particulièrement avantageuse du procédé de l'invention, le dispositif comporte, ainsi que représenté en figure 9, une mémoire permanente supplémentaire.

Dans le cas où le dispositif de l'invention est mis en oeuvre dans la version où un micro-ordinateur est utilisé, la mémoire permanente peut avantageusement être constituée par la mémoire de masse du micro-ordinateur constituée par exemple par des disques magnétiques souples.

Dans le cas au contraire où la version utilisée est une version mettant en oeuvre la carte autonome 310 décrite à la figure 5c déjà mentionnée et dans laquelle, la mémoire permanente notée 500A peut être constituée avantageusement par une mémoire morte du type EPROM, programmable électriquement. On comprendra que dans ce cas, la mémoire permanente 500A peut consister simplement en une extension mémoire de la mémoire EPROM 500 représentée sur la figure 5c précédemment décrite.

La mémoire supplémentaire permanente 500A dans le cas de la figure 9 peut avantageusement être subdivisée en une première mémoire permanente dans laquelle est mémorisé un programme de calcul de répartition des frais individuels de chauffage, le coefficient de répartition pi étant donné par la relation déjà citée pour chaque logement Li d'ordre i. De la même manière, dans la première mémoire permanente, peut également être mémorisé un programme de calcul de l'écart moyen de température ΔTd pour l'ensemble des logements sur une durée d sous-multiple ou non de la saison de chauffe conformément à la relation déjà citée.

La mémoire supplémentaire 500A peut en outre comporter une deuxième mémoire permanente dans laquelle sont mémorisées des valeurs constituant une table de transcodage. Ces valeurs permettent à partir de la température moyenne et du degré d'hygrométrie de l'atmosphère extérieure au bâtiment, la détermination de la température de conservation du bâti optimale en fonction des conditions atmosphériques extérieures et de la température moyenne du logement Li, pour éviter l'apparition de condensation de vapeur d'eau à l'intérieur du logement précité. La température de conservation du bâti optimale obtenue par transcodage des paramètres précédemment cités peut être déterminée par une transformation analogue à une transformation obtenue par le diagramme de Mollier.

Bien entendu, dans le cas où le dispositif de l'invention est mis en oeuvre au moyen d'un micro-ordinateur, les programmes précités peuvent être enregistrés sur les disques magnétiques souples de façon à être ensuite chargés en mémoire centrale du micro-ordinateur pour leur exécution.

On a ainsi décrit un procédé et un dispositif particulièrement adaptés à la répartition équitable des frais de chauffage individuels dans une installation de chauffage collective. Le procédé et le dispositif de l'invention sont remarquables en ce que ils permettent une telle répartition en fonction du seul confort thermique de l'usager occupant le logement Li considéré, tout en permettant pour cet usager, et à sa seule initiative, une conduite personnalisé de l'allure de chauffe de son logement, par rapport à des paramètres de référence tels que la température de conservation du bâti, la température moyenne du bâtiment.

## Revendications

1. Dispositif de mesure de la consommation relative d'énergie de chauffage des logements d'un immeuble collectif, comprenant pour chaque logement (Li) d'ordre de l'immeuble:

- des moyens (EI), (1) d'échantillonnage à des instants déterminés de la température moyenne instantanée ti de chaque logement (Li) et d'au moins une température de référence, d'au moins un point situé à l'extérieur de l'immeuble, lesdits moyens (Ei) d'échantillonnage comportant au moins un capteur de température (Ci) convenablement disposé dans ce logement (Li) d'ordre i, au moins un capteur (Cr) de la température de référence (tr) et des moyens de commande de ces capteurs permettant un relevé périodique de la température ti, tr affichée par ces capteurs,

- des moyens soustracteurs (12) aptes à élaborer la différence entre la température moyenne ti de chaque logement (Li) et la température de référence tr,

- des moyens (1, 2) pour intégrer sur une durée égale à la saison de chauffe ou sur une durée élémentaire sous multiple de la durée de la saison de chauffe l'écart desdites températures instantanées de façon à définir sur les durées correspondantes un écart de température moyen Tid pour chaque logement (Li) d'ordre i,

- des moyens pondérateurs (3) permettant de déterminer sur cette durée une valeur Rid de la mesure de la consommation relative d'énergie de chaque logement (Li) selon la relation

$$Rid = \frac{Vi \times Tid}{\sum_i Vi \times Tid}$$

où Tid représente l'écart de température moyen de chaque logement (Li) d'ordre rapporté à la durée déterminée égale ou à sous multiple de la saison de chauffe, Vi représente le volume habitable effectif de chaque logement (Li),

- des moyens de calcul de la répartition pi des frais individuels de chauffage pour chacun des logements (Li) d'ordre i, ladite répartition pi étant déterminée proportionnellement:

- au rapport de la durée d'occupation δi du logement (Li) d'ordre à la durée D de la saison de chauffe,

- au rapport du volume Vi du logement (Li) d'ordre i au volume total V chauffé par la chaufferie collective

$$V = \sum_i Vi,$$

- au rapport de l'écart moyen $\Delta ti\delta$ entre les températures moyenne intérieure de chaque logement (Li) d'ordre i et de référence extérieure pendant la durée d'occupation δi du logement (Li) d'ordre i à l'écart moyen de température $\Delta T$ pour l'ensemble des logements durant la saison de chauffe ou un sous-multiple de celle-ci, ladite répartition pi étant de la forme:

$$pi = \frac{\delta i \times Vi \times \Delta ti\delta}{D \times \sum Vi \times \Delta T}$$

2. Dispositif selon la revendication 1, dans lequel les moyens d'échantillonnage à des instants déterminés de la température moyenne instantanée ti de chaque logement (Li) comportent une pluralité de capteurs de température (Cij) convenablement répartis dans le logement (Li) d'ordre en une pluralité de points j, les capteurs (Cij) permettant de mesurer simultanément une pluralité de températures élémentaires moyennes instantanées tij pour chaque logement (Li) d'ordre i et des moyens de commande de ces capteurs permettant un relevé périodique de ces températures élémentaires tij affichées par ces capteurs.

3. Dispositif selon l'une des revendications 1 ou 2, dans lequel les moyens d'échantillonnage des températures moyennes ti ou températures moyennes élémentaires tij comprennent une horloge de référence de commande de la lecture des capteurs.

4. Dispositif selon la revendication 1, dans lequel les moyens pour intégrer sur une durée égale à la saison de chauffe ou sur une durée élémentaire sous multiple de la durée de la saison de chauffe comprennent:

- un registre de mémoire (20) capable de mémoriser les valeurs des écarts de températures moyens Tid sur la durée déterminée,

- des moyens sommateurs (21) dont une entrée reçoit la valeur de l'écart de température mesurée ti - tr et dont l'autre entrée reçoit la valeur de l'écart de température moyen Tid délivré par la sortie des moyens sommateurs (21) par l'intermédiaire du registre (20), ledit registre (20) recevant en outre un signal de remise à zéro (RAZ) de l'horloge (10).

5. Dispositif selon la revendication 1, dans lequel les moyens pondérateurs (3) comprennent:

- un registre de mémoire (30) capable de mémoriser et de délivrer un signal représentatif du volume Vi habitable de chaque logement (Li) d'ordre i,

- un multiplicateur (31) recevant sur une première entrée le signal Tid représentatif de l'écart de température moyen du logement d'ordre i intégré sur la saison de chauffe ou son sous multiple et sur une deuxième entrée le signal Vi délivré par le registre (30),

- un sommateur (32) à i entrées recevant sur son entrée d'ordre i le signal Tid x Vi délivré par le multiplicateur (31) et délivrant à sa sortie un signal représentatif de $\sum Tid \times Vi$,

- un diviseur (33) recevant sur une première entrée le signal $\sum Tid \times Vi$ délivré par le sommateur (32) et sur une deuxième entrée le signal Tid x vi et délivrant à sa sortie le signal Rid représentatif de la mesure de consommation relative d'énergie de chaque logement (Li).

6. Dispositif selon l'une des revendications précédentes 3 à 5, dans lequel dans le cas où les moyens d'échantillonnage à des instants déterminés de la température moyenne instantanée ti de chaque logement (Li) comportent une pluralité de capteurs de température (Cij), les moyens de commande de ces capteurs comprennent:
- une pluralité de portes analogiques (Pi1 à Pij),
- une pluralité de multiplicateurs (Mi1 à Mij) recevant, sur une première entrée, respectivement un signal représentatif de la température tij délivré par le capteur d'ordre j, et, sur une deuxième entrée, un signal vj délivré par un registre (Rij) et représentatif du volume de chauffage moyen en chaque point j de chaque logement (Li), chaque multiplicateur (Mij) délivrant sur sa sortie un signal vj x tij,
- deux sommateurs (Si1) et (Si2) à j entrées, le premier sommateur (Si1) recevant sur ses entrées respectivement les signaux vj x tij délivrés par les multiplicateurs (Mi1) à (Mij) et le sommateur (Si2) recevant sur ses entrées respectivement les signaux v1 à vj délivrés par les registres (Ri1) à (Rij),
- un diviseur (Di) recevant sur une première entrée le signal Σvi x ti délivré par le sommateur (Si1) et sur une deuxième entrée le signal Σvi délivré par le sommateur (Si2), ledit diviseur (Di) délivrant à sa sortie un signal ti représentatif de la température moyenne du logement (Li) d'ordre i.

7. Dispositif selon la revendication 1, lequel comprend un terminal (100) et au moins une interface modulaire programmable (200) susceptible d'assurer le transfert bi-directionnel ou le traitement de données entre ledit terminal (100) et une pluralité d'émetteurs récepteurs ou effecteurs (310) à (3NO), lesdits émetteurs/récepteurs ou effecteurs étant constitués par des transducteurs analogiques capables d'assurer des fonctions de protection, de détection ou de correction et l'interface programmable (200) pouvant comporter des unités de traitement de ces données en vue de leur intégration dans un programme de gestion général.

8. Dispositif selon la revendication 7, dans lequel le terminal (100) est un terminal série ou un micro-ordinateur muni de ses appareils périphériques (110, 111).

9. Dispositif selon l'une des revendications 7 ou 8, caractérisé en ce que ladite interface (200) comporte au moins:
- un coffret de base (220) comportant un bus de commande, un bus de données et un bus d'adresses (400) ainsi que les circuits d'alimentation (230),
- une pluralité de cartes enfichables (211, 212...) du type cartes d'entrée à niveau logique, cartes d'entrée analogiques, ou cartes d'entrée à mémoires, cartes de sorties du type cartes analogiques, cartes de sortie à niveau logique,
- au moins un carte de liaison série (300) susceptible de dialoguer avec le micro-ordinateur.

10. Dispositif selon l'une des revendications 7 à 9, lequel dans le but d'assurer une fonction de surveillance temporelle, l'interface (200) comporte une carte horloge/calendrier.

11. Dispositif selon la revendication 10, dans lequel la carte horloge calendrier comporte une mémoire morte modifiable électriquement (EAROM) permettant pour l'affichage ou l'utilisation d'une date de tenir compte des années bissextiles.

12. Dispositif selon l'une des revendications 7 à 11, dans lequel dans le but d'assurer une optimalisation du procédé de mesure de la consommation, une des interfaces (200) comprend une carte d'entrée à mémoire permettant le comptage gaz, le comptage eau, le comptage électricité, cette carte étant munie d'un bloc de report de comptage apte à assurer la transmission des données de comptage correspondantes vers la carte autonome et/ou le terminal ou vers la carte de liaison série et/ou le micro-ordinateur.

13. Dispositif selon l'une des revendications 10 à 12, dans lequel lorsque le terminal est un terminal série du type Minitel la carte de liaison série est une carte autonome (310) cette carte comportant au moins une unité centrale de traitement, une mémoire morte programmable électriquement (EPROM) (500) ou une mémoire à accès aléatoire (RAM) (501) sauvegardée par une batterie d'accumulateurs (502) dans laquelle le programme de mesure peut être chargé, une prise de liaison série (503) par connecteur normalisé et une prise de liaison série (505) en niveau logique TTL.

14. Dispositif selon l'une des revendications précédentes, lequel comporte en outre des moyens de mesure du degré d'hygrométrie à l'extérieur du bâtiment.

15. Dispositif selon la revendication 14, dans lequel les moyens de mesure du degré d'hygrométrie consistent en une sonde reliée au micro-processeur ou à la carte autonome.

16. Dispositif selon l'une des revendications 1 à 15, dans lequel les moyens de calcul de la répartition pi des frais individuels de chauffage pour chacun des logements Li d'ordre i sont constitués par une première mémoire permanente.

17. Dispositif selon la revendication 16, dans lequel dans la première mémoire permanente est également mémorisé l'écart moyen de température ΔTd écart moyen de température pour l'ensemble des logements sur une durée d, sous-multiple ou non de la saison de chauffe, déterminée à partir du début de celle-ci, l'écart moyen de température étant défini par

$$\Delta Td = \sum_i Vi \times \frac{\Sigma ti\delta}{V}$$

où Vi représente le volume du logement Li d'ordre i, Δtiδ représente l'écart moyen de température sur la durée d entre les températures moyenne intérieure du logement Li d'ordre i considéré pendant son temps d'occupation δi et la température moyenne extérieure et V le volume total chauffé

$$V = \sum_i Vi.$$

18. Dispositif selon l'une des revendications 1 à 16, dans lequel celui-ci comporte, en outre, une deuxième mémoire permanente dans laquelle sont mémorisées des valeurs constituant une table de transcodage, lesdites valeurs permettant, à partir de la température moyenne et du degré d'hygrométrie de l'atmosphère extérieure au bâtiment, la détermination de la température de conservation du bâti par une transformation du type diagramme de Mollier.

19. Procédé de mesure de consommation relative d'énergie de chauffage des logements d'un immeuble collectif, dans lequel pour chaque logement (Li) d'ordre i de l'immeuble, la température moyenne instantanée ti de chaque logement (Li) est mesurée à des instants déterminés et dans lequel l'écart des températures moyennes instantanées par rapport à au moins une température de référence tr est intégré sur une durée égale à la saison de chauffe ou sur une durée élémentaire sous-multiple de la durée de la saison de chauffe, de façon à définir sur les durées correspondantes un écart de température moyen Tid pour chaque logement (Li) une consommation relative d'énergie de chaque logement (Li) étant déterminée, sur cette durée, une valeur Rid de la mesure de consommation relative d'énergie de chaque logement (Li) par pondération, caractérisé en ce que ladite pondération est une pondération de la forme

$$Rid = \frac{Vi \times Tid}{\sum_1 Vi \times Tid}$$

où Tid représente l'écart de température moyen de chaque logement d'ordre i rapporté à la durée déterminée égale à ou sous-multiple de la saison de chauffe, Vi représente le volume habitable effectif de chaque logement (Li), la température de référence étant obtenue à partir d'au moins une mesure de température extérieure, la répartition pi des frais individuels de chauffage pour chacun des logements (Li) d'ordre étant déterminée proportionnellement:
- au rapport de la durée d'occupation δi du logement (Li) d'ordre i à la durée D de la saison de chauffe,
- au rapport du volume Vi du logement (Li) d'ordre i au volume chauffé total V par la chaufferie collective

$$V = \sum_i Vi,$$

- au rapport de l'écart moyen Δtiδ entre les températures moyenne intérieure de chaque logement (Li) d'ordre i et de référence extérieure pendant la durée d'occupation δi du logement (Li) d'ordre i à l'écart moyen de température ΔT pour l'ensemble des logements durant la saison de chauffe, ou un sous-multiple de celle-ci, lesdits frais étant déterminés au moyen du rapport global de répartition:

$$pi = \frac{\delta i \times Vi \times \Delta ti\delta}{D \times \sum Vi \times \Delta T}$$

les frais individuels étant ainsi fonction du seul confort thermique et donc du service réellement rendu à l'usager occupant, quelle que soit la provenance de l'énergie calorifique.

20. Procédé selon la revendication 19, dans lequel au jour considéré, correspondant à une durée d, sous-multiple ou non de la saison de chauffe, déterminée à partir du début de celle-ci, l'écart moyen de température ΔT pour l'ensemble des logements pour la durée considérée est déterminé par

$$\Delta Td = \sum_i \frac{Vi \times \sum ti\delta}{V}$$

où Vi représente le volume du logement Li d'ordre i, Δtiδ représente l'écart moyen de température sur la durée d entre les températures moyennes intérieures du logement Li d'ordre i considéré pendant son temps d'occupation δi et la température moyenne extérieure et V le volume total chauffé

$$V = \sum_i Vi.$$

21. Procédé selon l'une des revendications 19 ou 20, dans lequel dans le but de permettre à chaque usager occupant de chacun des logements (Li), d'ordre i d'assurer une conduite optimale de l'allure de chauffe individuelle et collective, ledit procédé consiste:
- à déterminer une température dite de conservation du bâti,
- à déterminer une température moyenne de l'ensemble des logements (Li) ou du bâtiment,
- à afficher pour l'usager:
- lesdites températures et la température moyenne du logement (Li) d'ordre i concernant l'usager considéré,
- le gain ou la perte sur les frais de chauffage pour des durées telles que la saison de chauffe ou un sous-multiple de celle-ci.

22. Procédé selon la revendication 21, dans lequel la température de conservation du bâti est déterminée à partir de la température moyenne et du degré d'hygrométrie de l'atmosphère extérieure au bâtiment.

23. Procédé selon la revendication 22, dans lequel la température de conservation du bâti est déterminée de façon à éviter, à l'intérieur du bâtiment, la condensation de vapeur d'eau.

## Patentansprüche

1. Vorrichtung zur Ermittlung des relativen Heizenergieverbrauchs der Wohnungen eines gemeinsamen Gebäudes, umfassend für jede Wohnung (Li) der Reihenfolge i des Gebäudes:

- Mittel (EI), (1) zum Abtasten der mittleren augenblicklichen Temperatur ti jeder Wohnung (Li) und mindestens einer Bezugstemperatur an mindestens einem außerhalb des Gebäudes befindlichen Punkt zu vorgegebenen Zeitpunkten, wobei diese Abtasteinrichtungen (Ei) mindestens einen Temperatursensor (Ci) umfassen, der in geeigneter Weise in dieser Wohnung (Li) der Reihenfolge i angeordnet ist, sowie mindestens einen Sensor (Cr) für die Bezugstemperatur (tr) und Steuereinrichtungen für die Sensoren, welche eine periodische Bestimmung der Temperatur ti, tr gestatten, die diesen Sensoren zugeordnet ist;

- Subtraktionseinrichtungen (12), die geeignet sind, die Differenz zwischen der mittleren Temperatur ti jeder Wohnung (Li) und der Bezugstemperatur tr herauszuarbeiten,

- Einrichtungen (1, 2) zum Integrieren der Abweichung der besagten Augenblickstemperaturen über ein Zeitintervall, das gleich der Heizsaison ist, oder über ein Zeitelement von mehreren innerhalb der Dauer der Heizsaison, und zwar derart, daß für die entsprechenden Zeiten für Jede Wohnung (Li) der Reihenfolge i eine mittlere Temperaturabweichung Tid definiert wird;

- Ausgleichseinrichtungen (3), welche für diesen Zeitraum das Bestimmen eines Wertes Rid gestatten, der ein Maß für den relativen Energieverbrauch für jede Wohnung (Li) ist, und zwar Gemäß der (folgenden) Gleichung

$$Rid = \frac{Vi \times Tid}{\sum_i Vi \times Tid}$$

in der Tid die mittlere Temperaturabweichung jeder Wohnung (Li) der Reihenfolge i bedeutet, bezogen auf die festgelegte Dauer, welche gleich der Dauer der Heizsaison oder gleich einem Bruchteil derselben ist, Vi das effektiv bewohnbare Volumen jeder Wohnung (Li) bedeutet,

- Einrichtungen zum Berechnen des individuellen Heizkostenanteils für jede der Wohnungen (Li) der Reihenfolge i, wobei dieser Anteil pi proportional bestimmt wird:

- zu dem Bruch der Dauer der Belegung der Wohnung (Li) der Reihenfolge i bezogen auf die Dauer D der Heizsaison,

- zu dem Bruch des Volumens Vi der Wohnung (Li) der Reihenfolge i, bezogen auf das von der gemeinsamen Heizung insgesamt beheizte Volumen

$$V = \sum_i Vi,$$

- zu dem Bruch der mittleren Differenz $\Delta ti\delta$ zwischen den mittleren Innentemperaturen jeder Wohnung (Li) der Reihenfolge i und der als Bezugstemperatur dienenden Außentemperatur während der Dauer δi der Belegung der Wohnung (Li) der Reihenfolge i bezogen auf die mittleren Temperaturdifferenz $\Delta T$ für sämtliche Wohnungen während der Heizsaison oder während eines Bruchteils derselben, wobei der Anteil folgende Form hat:

$$pi = \frac{\delta i \times Vi \times \Delta ti\delta}{D \times \sum Vi \times \Delta T}$$

2. Vorrichtung nach Anspruch 1, bei der die Einrichtungen zum Abtasten der mittleren Augenblickstemperatur jeder Wohnung (Li) zu vorgegebenen Zeitpunkten mehrere Temperatursensoren (Cij) umfassen, die in geeigneter Weise in der Wohnung (Li) der Reihenfolge i an mehreren Punkten verteilt sind, wobei die Sensoren (Cij) die gleichzeitige Messung mehrerer einzelner mittlerer Augenblickstemperaturen tij für jede Wohnung (Li) der Reihenfolge i gestatten, und in der die Steuereinrichtungen der Sensoren eine periodische Bestimmung derjenigen Einzeltemperaturen tij gestatten, die den Sensoren zugeordnet sind.

3. Vorrichtung nach einem der Ansprüche 1 oder 2, bei der die Einrichtungen zum Abtasten der mittleren Temperaturen ti oder der einzelnen mittleren Temperaturen tij einen Taktgeber zur Steuerung des Ablesens der Sensoren umfassen.

4. Vorrichtung nach Anspruch 1, bei der die Einrichtungen zum Integrieren über eine Dauer, die gleich der Heizsaison ist, oder über eine Zeiteinheit, die eine von mehreren innerhalb der Dauer der Heizsaison ist, folgendes umfassen:

- ein Speicherregister (20), welches die mittleren Temperaturabweichungen Tid über das vorgegebene Zeitintervall speichern kann;

- Summiereinrichtungen (21), deren einem Eingang die gemessene Temperaturdifferenz ti - tr zugeführt wird, und derem anderen Eingang die mittlere Temperaturabweichung Tid zugeführt wird, die vom Ausgang der Summiereinrichtungen (21) über das Register (20) geliefert wird, wobei das Register (20) unter anderem ein Rückstellsignal (RAZ) zum Zurückstellen der Uhr (10) empfängt.

5. Vorrichtung nach Anspruch 1, bei der die Ausgleichseinrichtungen (3) umfassen:

- ein Speicherregister (30), welches in der Lage ist, ein Signal, welches für das bewohnbare Volumen Vi jeder Wohnung (Li) der Reihenfolge i repräsentativ ist, zu speichern und auszugeben,

- einen Multiplizierer (31), der über einen ersten Eingang das Signal Tid empfängt, welches der mittleren Temperaturabweichung der Wohnung der Reihenfolge i, integriert über die Heizsaison oder einen Bruchteil derselben, entspricht und über einen zweiten Eingang das von dem Register (30) gelieferte Signal Vi;

- eine Summiereinrichtung (32) mit i Eingängen, welche an ihrem Eingang der Reihenfolge i das Signal Tid X Vid empfängt, welches von dem Multiplizierer (31) geliefert wird und welche an ihrem Ausgang ein Signal liefert, welches repräsentativ ist für $\Sigma$Tid X Vi,

- einen Teiler (33), der an seinem ersten Eingang das von der Summiervorrichtung (32) gelieferte Signal $\Sigma$Tid x Vi empfängt und an einem zweiten Eingang das Signal Tid x Vi, und der an seinem Ausgang das Signal Rid liefert, welches repräsentativ ist für das Maß des relativen Energieverbrauchs jeder Wohnung (Li).

6. Vorrichtung nach einem der vorausgehenden Ansprüche 3 bis 5, bei der für den Fall, daß die Abtasteinrichtungen, die zum Bestimmen der mittleren Augenblickstemperatur ti jeder der Wohnungen (Li) bestimmt sind, mehrere Temperatursensoren (Cij) umfassen, die Steuereinrichtungen für die Sensoren umfassen:

- mehrere analoge Tore (Pi1 bis Pij),

- mehrere Multiplizierer (Mi1 bis Mij), welche an einem ersten Eingang jeweils ein für die Temperatur tij repräsentatives Signal empfangen, das von dem Sensor der Reihenfolge j geliefert wird, und an einem zweiten Eingang ein Signal vj, welches von einem Register (Rij) geliefert wird und repräsentativ für das mittlere zu beheizende Volumen an jedem Punkt jeder Wohnung (Li) ist, wobei jeder Multiplizierer (Mij) an seinem Ausgang ein Signal vj x tij liefert;

- zwei Summiervorrichtungen (Si1) und (Si2) mit j Eingängen, wobei die erste Summiervorrichtung (Si1) an ihren Eingängen jeweils die Signale vj x tij empfängt, die von den Multiplizierern (Mi1 bis Mij) geliefert werden, und die Summiervorrichtung (Si2) an ihren Eingängen jeweils die Signale v1 bis vj empfängt, die von den Registern (Ri1 bis Rij) geliefert werden,

- einen Teiler (Di), der an einem ersten Eingang das Signal $\Sigma$vi x ti empfängt, das von der ersten Summiervorrichtung (Si1) geliefert wird, und an einem zweiten Eingang das Signal $\Sigma$vi, welches von der Summiervorrichtung (Si2) geliefert wird, wobei dieser Teiler (Di) an seinem Ausgang ein Signal ti liefert, welches der mittleren Temperatur der Wohnung (Li) der Reihenfolge i entspricht.

7. Vorrichtung nach Anspruch 1, welche ein Terminal (100) und mindestens eine programmierbare modulare Schnittstelle (200) umfaßt, welche geeignet ist, eine bidirektionale Übertragung oder Behandlung von Daten zwischen diesem Terminal (100) und mehreren Sende/Empfangs-Einheiten oder Ausführungsschaltungen (310 bis 3NO) zu gewährleisten, wobei die Sende/Empfangs-Einheiten oder Ausführungsschaltungen durch analoge Wandler gebildet sind, welche in der Lage sind, die Funktionen des Schutzes, der Erfassung oder der Korrektur sicherzustellen, wobei die programmierbare Schnittstelle (200) Einheiten zur Behandlung der Daten in bezug auf deren Integration in einem allgemeinen Ablaufprogramm enthalten kann.

8. Vorrichtung nach Anspruch 7, bei der das Terminal (100) ein Serienterminal oder ein Mikrorechner ist, der mit seinen peripheren Apparaten (110, 111) ausgestattet ist.

9. Vorrichtung nach einem der Ansprüche 7 oder 8, dadurch gekennzeichnet, daß die Schnittstelle (200) zumindest umfaßt:

- einen Basiskasten (220), der einen Befehlsbus, einen Datenbus und einen Adressenbus (400) umfaßt, sowie Versorgungs-(Netz)Schaltungen (230),

- mehrere Steckkarten (211, 212) des Kartentyps mit einem Eingang auf dem Niveau logischer Signale, Karten für analoge Eingangssignale oder Eingangskarten zu den Speichern, Ausgangskarten vom Typ analoger Karten, Ausgangskarten auf dem Niveau logischer Signale,

- mindestens eine Karte zur Herstellung einer seriellen Verbindung (300), die für einen Dialog mit dem Mikrorechner geeignet ist.

10. Vorrichtung nach einem der Ansprüche 7 bis 9, in der zum Zwecke der Gewährleistung einer Zeitüberwachungsfunktion die Schnittstelle (200) eine Uhr/Kalender-Karte umfaßt.

11. Vorrichtung nach Anspruch 10, bei der die Uhr/Kalender-Karte einen elektrisch programmierbaren Lesespeicher (EAROM) umfaßt, der das Zuordnen oder die Verwendung eines Datums ermöglicht, um Schaltjahren Rechnung zu tragen.

12. Vorrichtung nach einem der Ansprüche 7 bis 11, bei der zum Zwecke der Gewährleistung einer Optimierung des Verfahrens der Verbrauchsmessung eine der Schnittstellen (200) eine Eingangskarte mit einem Speicher umfaßt, welcher das Zählen von Gas, Wasser und Elektrizität ermöglicht, wobei diese Karte mit einem Block zum Berichten über den Zählerstand versehen ist, der geeignet ist, die Übertragung der entsprechenden Zählerdaten über die autonome Karte und/oder das Terminal oder über die Karte zur Herstellung einer seriellen Verbindung und/oder den Mikrorechner zu gewährleisten.

13. Vorrichtung nach einem der Ansprüche 10 bis 12, bei der, wenn es sich bei dem Terminal um ein Serienterminal des Typs "Minitel" handelt, die Karte zum Herstellen der seriellen Verbindung eine autonome Karte (310) ist, wobei diese Karte mindestens eine zentrale Recheneinheit, einen elektrisch programmierbaren Lesespeicher (EPROM) (500) oder einen adressierbaren Speicher (RAM) (501) trägt, die durch eine Akkumulatorbatterie (502) geschützt sind, und in den das Meßprogramm geladen werden kann, sowie einen seriellen Anschluß (503) für einen genormten Stecker und einen Serienanschluß (505) mit dem logischen Pegel von TTL-Signalen.

14. Vorrichtung nach einem der vorangehenden Ansprüche, welche unter anderem Einrichtungen zum Messen des Grades der Feuchtigkeit außerhalb des Gebäudes umfaßt.

15. Vorrichtung nach Anspruch 14, dadurch gekennzeichnet, daß die Einrichtungen zum Messen des Grades der Feuchtigkeit aus einer Sonde bestehen, die mit dem Mikroprozessor oder der autonomen Karte verbunden ist.

16. Vorrichtung nach einem der Ansprüche 1 bis 15, bei der die Einrichtungen zum Berechnen der Aufteilung ρi der individuellen Heizkosten für jede der Wohnungen (Li) der Reihenfolge i durch einen ersten permanenten Speicher gebildet sind.

17. Vorrichtung nach Anspruch 16, bei der in dem ersten permanenten Speicher gleichzeitig die mittlere Temperaturabweichung ΔTd für die Gesamtheit aller Wohnungen über eine Dauer d gespeichert ist, die ein Bruchteil der Heizsaison oder nicht ist, und zwar vom Anfang derselben ab festgelegt, wobei diese mittlere Temperaturabweichung durch folgende Gleichung definiert ist:

$$\Delta Td = \sum_i \frac{Vi \times \sum ti\delta}{V}$$

in der Vi das Volumen der Wohnung (Li) der Reihenfolge i, Δtiδ die mittlere Temperaturabweichung über die Dauer d zwischen den mittleren Innentemperaturen der Wohnung (Li) der Reihenfolge i, betrachtet während der Dauer ihrer Belegung δi und der mittleren Außentemperatur, bedeutet, und wobei V das gesamte beheizte Volumen

$$V = \sum_i Vi$$

ist.

18. Vorrichtung nach einem der Ansprüche 1 bis 16, welche unter anderem einen zweiten permanenten Speicher umfaßt, in dem diejenigen Werte gespeichert sind, welche eine Umkodiertabelle bilden, wobei diese Werte, ausgehend von der mittleren Temperatur und dem Feuchtigkeitsgrad der Atmosphäre außerhalb des Gebäudes, die Bestimmung der Erhaltungstemperatur des Gebäudes durch eine Umformung eines Mollierdiagramms gestatten.

19. Verfahren zum Bestimmen des relativen Heizenergieverbrauchs der Wohnungen eines gemeinsamen Gebäudes, bei dem für jede Wohnung (Li) der Reihenfolge i des Gebäudes die mittlere augenblickliche Temperatur ti jeder Wohnung (Li) zu vorgegebenen Zeitpunkten gemessen wird, und bei dem die Abweichung der mittleren Augenblickstemperaturen bezüglich mindestens einer Bezugstemperatur tr über ein Zeitintervall integriert wird, dessen Dauer gleich der Dauer der Heizsaison oder gleich einer Zeiteinheit ist, die eine von mehreren während der Dauer der Heizsaison ist, derart, daß für die betreffenden Zeitintervalle für jede Wohnung (Li) eine mittlere Temperaturabweichung tid definiert wird, wobei ein relativer Energieverbrauch für jede Wohnung (Li) für dieses Zeitintervall bestimmt wird, sowie ein Wert Rid als Maß für den relativen Energieverbrauch jeder Wohnung (Li) durch Ausgleich, dadurch gekennzeichnet, daß dieser Ausgleich nach folgender Form erfolgt:

$$Rid = \frac{Vi \times Tid}{\sum_1 Vi \times Tid}$$

wobei Tid die mittlere Temperaturabweichung jeder Wohnung der Reihenfolge i, bezogen auf das vorgegebene Zeitintervall, welches gleich der Dauer der Heizsaison oder gleich einem Bruchteil derselben sein kann, Vi das effektiv bewohnbare Volumen jeder Wohnung (Li) ist, wobei die Bezugstemperatur ausgehend von mindestens einer Messung der Außentemperatur erhalten wird, und wobei der individuelle Heizkostenanteil ρi für jede der Wohnungen (Li) der Reihenfolge i proportional bestimmt wird:
- zu dem Bruch der Dauer der Belegung der Wohnung (Li) der Reihenfolge i bezogen auf die Dauer D der Heizsaison,
- zu dem Bruch des Volumens Vi der Wohnung (Li) der Reihenfolge i, bezogen auf das von der gemeinsamen Heizung insgesamt beheizte Volumen

$$V = \sum_i Vi,$$

- zu dem Bruch der mittleren Differenz Δtiδ zwischen den mittleren Innentemperaturen jeder Wohnung (Li) der Reihenfolge i und der als Bezugstemperatur dienenden Außentemperatur während der Dauer δi der Belegung der Wohnung (Li) der Reihenfolge i bezogen auf die mittleren Temperaturdifferenz ΔT für sämtliche Wohnungen während der Heizsaison oder während eines Bruchteils derselben, wobei der Anteil folgende Form hat:

$$\rho i = \frac{\delta i \times Vi \times \Delta ti\delta}{D \times \sum Vi \times \Delta T}$$

so daß die individuellen Kosten folglich allein eine Funktion des Wärmekomforts und damit der tatsächlichen Leistung sind, die an den Bewohner bzw. Benutzer geliefert wurde, woher auch immer die Heizenergie stammen möge.

20. Verfahren nach Anspruch 19, bei dem am betrachteten Tag, der einer Dauer d entspricht, bei der es sich um die Heizsaison handeln kann oder nicht, ausgehend vom Beginn derselben, die mittlere Temperaturdifferenz ΔT für die Gesamtheit der Wohnungen für die betrachtete Dauer bestimmt wird gemäß

$$\Delta Td = \sum_i \frac{Vi \times \Delta ti\delta}{V}$$

wobei Vi das Volumen der Wohnung (Li) der Reihenfolge i, Δtiδ die mittlere Temperaturabweichung während der Dauer d zwischen den mittleren Innentemperaturen der Wohnung (Li) der Reihenfolge i, betrachtet während der Zeit ihrer Belegung δi und der mittleren Außentemperatur, ist, und V das gesamte zu beheizende Volumen

$$V = \sum_i Vi \text{ ist.}$$

21. Verfahren nach einem der Ansprüche 19 oder 20, bei dem zu dem Zweck, für jeden Benutzer bzw. Bewohner jeder der Wohnungen (Li) der Reihenfolge i die Möglichkeit zu schaffen, eine optimale Führung der individuellen und kollektiven Heizungseinstellung zu sichern, das Verfahren besteht in:
- der Bestimmung einer Temperatur, die als Erhaltungstemperatur des Gebäudes bezeichnet wird,
- dem Bestimmen einer mittleren Temperatur der Gesamtheit der Wohnungen (Li) oder des Gebäudes,
- dem Anzeigen für den Benutzer:
- der genannten Temperaturen und der mittleren Temperatur der Wohnung (Li) der Reihenfolge i, die den betrachteten Benutzer betrifft,
- des Gewinns oder des Verlusts bezüglich der Heizkosten für die Zeitintervalle, wie z. B. die Heizsaison oder einen Bruchteil derselben.

22. Verfahren nach Anspruch 21, bei dem die Erhaltungstemperatur des Gebäudes, ausgehend von der mittleren Temperatur und dem Feuchtigkeitsgrad der Atmosphäre außerhalb des Gebäudes, bestimmt wird.

23. Verfahren nach Anspruch 22, bei dem die Erhaltungstemperatur für das Gebäude in der Weise bestimmt wird, daß im Inneren des Gebäudes die Kondensation von Wasserdampf verhindert wird.

**Claims**

1. Arrangement for measuring the relative energy consumption of the heating of dwellings in a multiple property comprising, for each dwelling (Li) of the order i of the property:
- means (EI), (1) for sampling at predetermined instants the instantaneous mean temperature ti of each dwelling (Li) and at least one reference temperature, of at least one point situated outside the property, the said sampling means (Ei) comprising at least one temperature sensor. (Ci) conveniently arranged in the dwelling (Li) of the order i, at least one sensor (Cr) for the reference temperature (tr) and means for controlling the sensors permitting periodic reading of the temperature ti, tr displayed by these sensors,
- subtraction means (12) adapted to derive the difference between the mean temperature ti of each dwelling (Li) and the reference temperature tr,
- means, (1, 2) for integrating over a period equal to the heating season or over an elementary period which is a sub-multiple of the duration of the heating season, the divergence of the said instantaneous temperatures in a manner such as to define over the corresponding periods a mean temperature difference Tid for each dwelling (Li) of the order i,
- calculating means (3) allowing the determination over this period of a value Rid of the measure of the relative energy consumption of each dwelling (Li) in accordance with the relation

$$Rid = \frac{Vi \times Tid}{\sum_i Vi \times Tid}$$

where Tid represents the mean divergence of the temperature of each dwelling (Li) taken with respect to the period determined and equal to, or a sub-multiple of, the heating season, Vi representing the effective habitable volume of each dwelling (Li),
- means for calculating the share pi of the individual heating charges for each of the dwellings (Li) of the order i, the said share pi being determined proportionally:
- with respect to the period of occupation δi of the dwelling (Li) of the order i over the period D of the heating season,
- with respect to the volume Vi of the dwelling (Li) of the order i in relation to the total volume V heated by the overall heating system

$$V = \sum_i Vi,$$

- with respect to the mean divergence Δtiδ between the mean inside temperatures of each dwelling (Li) of the order i and the outside reference during the period of occupation δi of the dwelling (Li) of the order i to the mean divergence of the temperature ΔT for the set of dwellings during the heating season or a sub-multiple of it, the said share pi being of the form:

$$pi = \frac{\delta i \times Vi \times \Delta ti\delta}{D \times \sum Vi \times \Delta T}$$

2. Arrangement according to claim 1, in which the means for sampling at predetermined instants the instantaneous mean temperature ti of each dwelling (Li) comprise a plurality of temperature sensors (Cij) conveniently distributed in the dwelling (Li) of the order i at a plurality of points j, the sensors (Cij) allowing the simultaneous measurements of a plurality of instantaneous mean elementary temperatures tij for each dwelling (Li) of the order i and means for controlling these sensors to allow periodic reading of these elementary temperatures tij displayed by the sensors.

3. Arrangement according to one of claims 1 or 2, in which the means for sampling mean temperatures ti or elementary mean temperatures tij comprise a reference clock controlling the reading of the sensors.

4. Arrangement according to claim 1, in which the means for integrating over a period equal to the heating season or an elementary period which is a sub-multiple of the duration of the heating season comprise:

- a memory register (20) capable of memorising the values of the mean divergences of the temperature Tid over the predetermined period,

- adding means (21) of which one input receives the value of the divergence of the measured temperature ti - tr and of which the other input receives the value of the mean divergence of the temperature Tid delivered by the output of the summing means (21) through the intermediary of the register (20), the said register (20) receiving in addition a zero re-setting signal (RAZ) from the clock (10).

5. Arrangement according to claim 1, in which the calculating means (3) comprise:

- a memory register (30) capable of memorising and delivering a signal representing the habitable volume Vi of each dwelling (Li) of the order i,

- a multiplier (31) receiving through a first input the signal Tid representing the mean divergence of the temperature of the dwelling of the order i integrated over the heating season or its sub-multiple and through a second input the signal Vi delivered by the register (30),

- an adder (32) with i inputs receiving at its input of the order i the signal Tid x Vi delivered by the multiplier (31) and delivering to its output a signal representing $\Sigma$Tid x Vi,

- a divider (33) receiving at a first input the signal $\Sigma$Tid x Vi delivered by the adder (32) and at a second input the signal Tid x vi and delivering at its output the signal Rid representing the measure of the relative energy consumption of each dwelling (Li).

6. Arrangement according to one of the preceding claims 3 to 5, in which in the case where the means for sampling at predetermined instants the instantaneous mean temperature ti of each dwelling (Li) comprise a plurality of temperature sensors Cij, the means for controlling the sensors comprising;

- a plurality of analogue gates (Pi1 to Pij),

- a plurality of multipliers (Mi1 to Mij) receiving at a first input respectively a signal representing the temperature tij delivered by the sensor of the order and, at a second input, a signal vj delivered by a register (Rij) and representing the mean heating volume at each point in each dwelling (Li), each multiplier (Mij) delivering at its output a signal vj x tij,

- two adders (Si1) and (Si2) with j inputs, the first adder (Si1) receiving at its inputs respectively the signals vj x tij delivered by the multipliers (Mi1) to (Mij) and the adder (Si2) receiving at its inputs respectively the signals v1 to vj delivered by the registers (Ri1) to (Rij),

- a divider (Di) receiving at a first input the signal $\Sigma$vi x ti delivered by the adder (Si1) and at a second input the signal $\Sigma$vi delivered by the adder (Si2), the said divider (Di) delivering at its output a signal ti representing the mean temperature of the dwelling (Li) of the order i.

7. Arrangement according to claim 1, which comprises a terminal (100) and at least one programmable modular interface (200) capable of handling the bi-directional transfer or the processing of the data between the said terminal (100) and a plurality of emitters receivers or effectors (310) to (3N0) the said emitters/receivers or effectors being constituted by analogue transducers capable of achieving the functions of protection, detection or correction and the programmable interface (200) being capable of comprising handling units for these data designed to integrate them into a general management programme.

8. Arrangement according to claim 7, in which the terminal (100) is a standard terminal or a microprocessor provided with peripheral equipment (110, 111).

9. Arrangement according to one of claims 7 or 8, characterised in that the said interface (200) comprises at least:

- a base control unit (220) comprising a control bus, a data bus and an address bus (400) as well as supply circuits (230),

- a plurality of plug-in cards (211, 212...) of the logic level input type, analogue input cards or memory input cards, output cards of the analogue card type, or logic level output cards.

- at least one standard intercommunication card (300) capable of dialogue with the microprocessor.

10. Arrangement according to one of claims 7 to 9, in which with the aim of ensuring a temporal supervisory function, the interface (200) comprises a clock/calendar card.

11. Arrangement according to claim 10, in which the clock/calendar card comprises an electrically programmable read-only memory (EAROM) allowing the display or use of a date taking account of leap years.

12. Arrangement according to one of claims 7 to 11, in which, with the aim of ensuring optimisation of the process of measuring the consumption, one of the interfaces (200) comprises a memory input card providing for computation of the gas consumption, water consumption and electricity consumption, this card being provided with a consumption report field designed to ensure the transmission of the corresponding consumption data to the special card and/or the terminal or to the standard liaison card and/or the microprocessor.

13. Arrangement according to one of claims 10 to 12, in which, where the terminal is a standard terminal of the Minitel type, the standard liaison card is a special card (310) this card comprising at least one central processing unit, an electrically programmable read-only memory (EPROM) (500) or a random access memory (RAM) (501) safeguarded by an accumulator battery (502) in which the measurement programme can be stored, a standard connecting device (503) with a standard connector and a standard connecting device (505) of TTL logic level.

14. Arrangement according to one of the preceding claims, which comprises in addition means for measuring the degree of humidity outside the building.

15. Arrangement according to claim 14, in which the means for measuring the degree of humidity consist of a probe connected to the microprocessor or to the special card.

16. Arrangement according to one of claims 1 to 15, in which the means for calculating the share $\rho i$ of the individual heating charges for each of the dwellings Li of the order i are constituted by a first permanent memory.

17. Arrangement according to claim 16 in which, in the first permanent memory, there is equally memorised the mean divergence of the temperature $\Delta Td$ mean divergence of the temperature for the set of dwellings over a period d, sub-multiple or not of the heating season, determined starting from the beginning of it, the mean divergence of temperature being defined by

$$\Delta Td = \sum_i \frac{Vi \times \Delta ti\delta}{V}$$

where Vi represents the volume of the dwelling Li of the order i, $\Delta Ti\delta$ represents the mean divergence of the temperature over the duration d between the mean inside temperatures of the dwelling Li of the order i considered during the time of occupation $\delta i$ and the mean outside temperature, and V is the total volume heated

$$V = \sum_i Vi.$$

18. Arrangement according to one of claims 1 to 16, in which it comprises in addition a second permanent memory in which are memorised the values constituting a trans-coding table, the said values allowing, starting from the mean temperature and the humidity of the atmosphere outside the building, the determination of the conservation temperature of the building by a transformation of the Mollier diagram type.

19. Process for measuring the relative energy consumption of the heating of dwellings in a multiple property, in which for each dwelling (Li) of the order i of the property the instantaneous mean temperature ti of each dwelling (Li) is measured at predetermined instants and in which the divergence of the instantaneous mean temperatures with respect to at least one reference temperature tr is integrated over a period equal to the heating season or over an elementary period which is a sub-multiple of the duration of the heating season, in a manner such as to define over the corresponding period a mean temperature divergence Tid for each dwelling (Li), a relative energy consumption for each dwelling (Li) being determined over this period, a value Rid of the measure of the relative energy consumption of each dwelling (Li) by calculation, characterised in that the said calculation is an equation of the form

$$Rid = \frac{Vi \times Tid}{\sum_i Vi \times Tid} \qquad (I)$$

where Tid represents the mean divergence of the temperature of each dwelling of the order i, with respect to the predetermined period equal to or a sub-multiple of, the heating season, Vi represents the useful habitable volume of each dwelling (Li), the reference temperature being obtained starting from at least one outside temperature measurement, the share $\rho i$ of the individual heating charges for each of the dwellings (Li) of the order i being determined proportionally:

- with respect to the duration of occupation $\delta i$ of the dwelling (Li) of the order i over the period D of the heating season,

- with respect to the volume Vi of the dwelling (Li) of the order i in relation to the total volume V heated by the overall heating system

$$V = \sum_i Vi,$$

- with respect to the mean divergence $\Delta ti\delta$ between the mean inside temperature of each dwelling (Li) of the order i and the outside reference during the period of occupation $\delta i$ of the dwelling (Li) of the order i to the mean divergence of the temperature $\Delta T$ for the set of dwellings during the heating season, or a sub-multiple of it, the said charges being determined by means of the overall distribution relationship:

$$\rho i = \frac{\delta i \times Vi \times \Delta ti\delta}{D \times \sum Vi \times \Delta T}$$

the individual charges thus being a function of the individual thermal comfort and thus of the service actually provided to the occupier, regardless of the source of the calorific energy.

20. Process according to claim 19, in which on the day considered corresponding to a duration d, a sub-multiple or not of the heating season, determined starting from the beginning of it, the mean divergence of temperature $\Delta T$ for the set of dwellings for the period under consideration is determined by

$$\Delta Td = \sum_i \frac{Vi \times \Delta ti\delta}{V}$$

where Vi represents the volume of the dwelling Li of the order i, $\Delta ti\delta$ represents the mean divergence of the temperature over the period d between the mean inside temperatures of the dwelling Li of the order i considered during its period of occupation $\delta i$ and the mean outside temperature and V the total volume heated

$$V = \sum_i Vi.$$

21. Process according to one of claims 19 or 20, in which with the aim of allowing each occupant of each of the dwellings (Li) of the order i to ensure optimum conduct of the individual and overall heating installations, the said process comprising:
- determining a stated conservation temperature of the building,
- determining a mean temperature of the set of dwellings (Li) or of the building,
- displaying to the user:
- the said temperature and the mean temperature of the dwelling (Li) of the order i concerning the user in question, and
- the gain or the loss on the heating charge for periods such as the heating season or a sub-multiple of it.

22. Process according to claim 21, in which the conservation temperature of the building is determined by starting from the mean temperature and the humidity of the atmosphere outside the building.

23. Process according to claim 22, in which the conservation temperature of the building is determined in a manner such as to avoid condensation of water vapour inside the building.

FIG_1

FIG_3

1

FIG_2

EP 0 181 259 B1

FIG.4

FIG.5a

FIG.5b

FIG.5c

FIG.6

FIG – 7

F.G – 9

## ECRAN  N° 1

TABLEAU  DE  BORD  DU  CHAUFFAGE

De  M$^r$  DUPOND              entré  le  30/09/84

A 10 h33   T° LOGT = 24°       T° EXT = 18.4°

|  | DEBUT  CHAUFFAGE<br>A  AUJOURD'HUI | 01/10/84<br>25/04/85 | SUR<br>24H |
|---|---|---|---|
| TEMP.  MOY.  LOGEMENT          TL | | 16° | 18° |
| TEMP  MOY  BATIMENT | | 19° | 18° |
| GAIN (+)  OU  PERTE (-)<br>FRAIS  DE  CHAUFFAGE | | +18° | 0% |

"SUITE"

## FIG-8a

ECRAN  N° 2

TABLEAU  DE  BORD  (SUITE )
DEPUIS  VOTRE  DERNIERE  CONSULTATION  LA
TEMPERATURE  MOYENNE  DE  VOTRE  LOGEMENT
SUR   24 H  A  ETE  PARFOIS  INFERIEURE  A  15°
VOUS  DEGRADEZ  VOTRE  LOGEMENT . LE  GAIN
POUR  LES  JOURS  CONCERNES  A  ETE  CALCULE
AVEC  UNE  TEMPERATURE  DE  15°.
REMONTEZ  LES  THERMOSTATS  DES  CONVECTEURS
NE  BOUCHEZ  PAS  LES  ENTREES  D´AIR

APPUYEZ  SUR  "RETOUR"  :  ECRAN  PRECEDENT
                "SUITE"   :        SUIVANT
        "FIN  CONNEXION"  :  ARRET  DU  MINITEL

FIG -8b

ECRAN  N° 3

TABLEAU  DE  BORD  (SUITE)

DEPUIS  VOTRE  DERNIERE  CONSULTATION  LA
TEMPERATURE  MOYENNE  DE  VOTRE  LOGEMENT
SUR  24 H  A  ETE  PARFOIS  SUPERIEURE  A  LA
TEMPERATURE  MOYENNE  DU  BATIMENT.  VOS
FRAIS  DE  CHAUFFAGE  SONT  PLUS  IMPORTANTS
BAISSEZ  LES  THERMOSTATS  DES  CONVECTEURS
PROGRAMMEZ  VOS  T° ECONOMIQUES
NE  BOUCHEZ  PAS  LES  ENTREES  D'AIR

APPUYEZ  SUR  "RETOUR" :  ECRAN  PRECEDENT
              "SUITE"   :         SUIVANT
        "FIN CONNEXION" :  ARRET  DU  MINITEL

FIG -8c

17

ECRAN    N° 4

TABLEAU   DE   BORD (SUITE )

DEPUIS  VOTRE  DERNIERE  CONSULTATION  LA
TEMPERATURE  MOYENNE  DE  VOTRE  LOGEMENT
SUR  24 HEURES  EST  RESTEE  SUPERIEURE  A  15
DEGRES  ET  INFERIEURE  A  LA  TEMPERATURE
MOYENNE  DU   BATIMENT
FELICITATION.......CONTINUEZ  A  PROGRAMMER
VOTRE  CHAUFFAGE  DE  LA  MEME  FACON......

APPUYEZ  SUR   "RETOUR"  : ECRAN  PRECEDENT
                "SUITE"   :      SUIVANT
        "FIN CONNEXION"  : ARRET  DU  MINITEL

FIG-8d